# EUROPÄISCHE PATENTSCHRIFT

(11) **EP 0 733 192 B1**
(45) Veröffentlichungstag und Bekanntmachung des Hinweises auf die Patenterteilung: **21.01.1998**
(21) Anmeldenummer: 95901382.2
(22) Anmeldetag: 15.11.1994
(51) Int. Cl.: F28D 20/02

(54) **LATENTWÄRMESPEICHER**
LATENT HEAT STORE
ACCUMULATEUR DE CHALEUR LATENTE

(30) Priorität: 09.12.1993 DE 4342020; 16.12.1993 DE 4342911; 11.06.1994 DE 4420475
(43) Veröffentlichungstag der Anmeldung: 25.09.1996
(73) Patentinhaber: Schümann Sasol GmbH & Co. KG, 20457 Hamburg (DE)
(72) Erfinder: FIEBACK, Klaus, D-10369 Berlin (DE); MATTHÄI, Michael, D-24558 Henstedt-Ulzburg (DE); HILDEBRAND, Günter, D-06729 Rehmsdorf (DE); KRÄMER, Thomas, D-74740 Adelsheim (DE); KUTZKER, Lutz, D-15517 Fürstenwalde (DE); MATZAT, Norbert, D-22457 Hamburg (DE)
(74) Vertreter: Müller, Enno, Dipl.-Ing.
(86) Internationale Anmeldenummer: EP9403784
(87) Internationale Veröffentlichungsnummer: WO9516176

(56) Entgegenhaltungen:
- WO-A-80/01509
- FR-A- 2 408 806
- FR-A- 2 428 796

## Beschreibung

Die Erfindung betrifft einen Latentwärmespeicher mit einem Latent-Wärmeübertragungsmedium, wobei das Wärmeübertragungsmedium über eine Düsenanordnung in das Wärmespeichermedium eindüsbar ist.

Latentwärmespeicher sind hauptsächlich in zwei Kategorien einzuteilen, sogenannte statische und sogenannte dynamische Latentwärmespeicher. Zu der zuerst genannten Kategorie ist bspw. auf die DE-A1 27 41 829 zu verweisen. Bei diesem bekannten Latentwärmespeicher ist ein Wämespeichermedium, nämlich Paraffin, in eine Kunststoffhülle eingeschlossen. Eine Mehrzahl von solchen Kunststoffhüllen befindet sich in einem mit Wasser gefüllten Speichergefäß. Der Wärmetransport erfolgt über Wärmeleitung durch die Kunststoffumhüllung an das Paraffin. Das Wasser kann hierbei als Wärmeübertragungsmedium zirkulieren. Zur Kategorie der dynamischen Latentwärmespeicher ist bspw. auf die DD 23 68 62 und die DD 28 01 13 zu verweisen. Weiter auch auf die DE-A1 41 22 859. Das Wärmeübertragungsmedium, bspw. Wasser oder Alkohol, steht hierbei in unmittelbarem Kontakt zu dem Wärmespeichermedium, bspw. Paraffin. Bei bekannten Ausführungsformen des dynamische Latentwärmespeichers ist in dem Latentwärmespeicher ein Unterdruck ausgebildet. Bei einer Wärmeeinspeicherung siedet das Wärmeübertragungsmedium, also bspw. Wasser, und durchsetzt das darüber befindliche verfestigte Wärme speichermedium, also bspw. Paraffin. Das dampfförmige Wärmeübertragungsmedium kondensiert, tropft zurück und wird erneut verdampft bis zum Erreichen eines entspreche den Gleichgewichtszustandes. Das Paraffin wird hierüber durch die Wärmeeintragung verflüssigt. Oberhalb des Para fins sammelt sich dann das Wärmeübertragungsmedium in Dampfform. Wird diese Dampfphase gekühlt (kondensiert) taucht das verflüssigte Wärmeübertragungsmedium in das flüssige Wärmespeichermedium ein und verdampft erneut. Auch dieser Vorgang endet bei Erreichen eines entsprechenden Gleichgewichtszustandes. Nachteilig bei diesem Verfahrensprinzip sind hohe Aufwendungen zur Gewährleistung entsprechender Unterdrücke sowie funktionseinschränkende Dampftransportprobleme. Eine weitere besondere Problematik insbesondere hinsichtlich der genannten dynamischen Latentwärmespeicher ist dadurch gegeben, daß das Wärmespeichermedium sowohl im festen wie im flüssigen Zustand an sich ein Wärmedämmittel ist, also nur schwer Wärme überträgt. Das Wärmeübertragungsmedium muß daher das Wärmespeichermedium sukzessiv aufschmelzen, um es dann durchsetzen zu können und insgesamt die Wärme in dem Wärmespeichermedium zu speichern. Es ist in diesem Zusammenhang bereits in der DE-A-43 07 065 vorgeschlagen worden, das Wärmespeichermedium als solches in gewisser Weise zu modifizieren, um besondere kanalartige Ausgestaltungen im Wärmespeichermedium selbst zu erreichen.

Weiter ist es auch bereits bekanntgeworden, ohne den genannten Unterdruck in einem solchen Latentwärmespeicher zu arbeiten und das Wärmeübertragungsmedium in den Latentwärmespeicher einzudüsen. Es wird hierzu bspw. auf die Literaturstelle "Latentwärmespeicher für Heizsysteme" (Dr. Ing. S. Banas, M. Laumen in TAB 7/84, S. 509 - 513) verwiesen. Weiter auf die DE-A1 32 36 319, die DE-A1 31 14 270 und die DE-A1 33 45 061.

Die DE-A1 31 14 270 beschreibt einen Latentwärmespeicher, bei welchem als Wärmeübertragungsmedium Petroleum verwendet ist und als Wärmespeichermedium Glaubersalz. Im entladenen Zustand, bei verfestigten Glaubersalz, befindet sich das flüssige Petroleum oberhalb des Glaubersalzes. Zur Beladung, d.h. Wärmeeinspeicherung des Latentwärmespeichers wird das Petroleum sodann in einem Kreislauf geführt, bei welchem Wärme zugeführt wird. In dem Latentwärmespeicher wird das Petroleum weiter über ein in den Glaubersalzbereich hineinragendes Rohr in das Glaubersalz eingespeist, wobei das Rohr an seiner unteren Stirnseite eine oder mehrere Austrittsöffnungen aufweist. Weiter ist das Rohr mit einer über seine gesamte, in das Glaubersalz hineinragende Länge mit einer Hülse aus porösem Material überzogen. Im Beladungsverfahren, der Einspeicherung von Wärme, strömt nun erhitztes Petroleum aus den unteren stirnseitigen Öffnungen des Rohres aus und durchsetzt zunächst die Hülse aus porösem Material, und zwar axial entlang der Hülse von unten nach oben, um erst dann radial in das Glaubersalz einzudringen und es durch Übertragung der Wärme zu verflüssigen.

Weiter ist aus der WO80/01509 ein Latentwärmespeicher mit einem Salzhydrat als Wärmespeichermedium bekannt. Das Wärmeübertragungsmedium ist ein in einer Schichtung oberhalb des Wärmespeichermediums angeordnetes Öl. Es sind Düsenrohre vorgesehen, welche sich in verschiedenen Höhen in das im unteren Bereich des in diesem bekannten Latentwärmespeicher befindlichen Salzhydrats erstrecken. Hiervon wird immer eine Düsenebene eröffnet und bei Fortschreiten wieder geschlossen. Während die Einspeicherung von Wärme bei der obersten Düsenebene beginnt, beginnt die Auskupplung in der untersten Düsenebene. Diese setzt sich beim Ausspeichern alsbald mit verfestigten Salzhydrat zu, so daß dann zur nächst höheren Düsenebene übergegangen wird. Weiter ist aus der FR-A 2 428 796 ein Latentwärmespeicher bekannt mit einer unteren Schicht eines Wärmespeichermediums und einer oberen Schicht eines Wärmeübertragermediums. Als Wärmespeichermedium ist Glaubersalz beschrieben. Als Wärmeübertragungsmedium ist Öl verwendet. Beim Ausspeichern von Wärme werden zunehmend Düsen abgeschaltet bzw. auf höher gelegene Düsen umgeschaltet.

Diese bekannten Verfahren und die bekannten Vorrichtung werden noch nicht im Hinblick auf die erforderlichen Reaktionszeiten zum Einspeichern und Ausspeichern von Wärme als optimal angesehen. Bei Verwendung organischer, stark konglomerierender Speichermaterialien ergeben sich sogar erhebliche Funktionseinschränkungen aufgrund des Stoffverbundes "poröser Stoff-Speichermaterial". Hinzukommen Probleme der Trennung von Wärmespeichermedium und Wärmeübertragungsmedium. Die Folge sind Verstopfungen.

Ausgehend von einem Stand der Technik gemäß der WO80/01509 beschäftigt sich die Erfindung mit der technischen Problematik, eine Verbesserung hinsichtlich eines raschen Ein- und Ausspeicherns von Wärme zu erreichen.

Diese Problematik ist beim Gegenstand des Anspruches 1 gelöst. Die Eindüsung wird hierbei bevorzugt immer unterhalb des verfestigten Wärmespeichermediums, gleichsam in einer ersten Etage, begonnen. In dieser ersten Höhenstufe bzw. ersten Etage befindet sich flüssiges Wärmeübertragungsmedium (diese Beschreibung gilt jedenfalls für die Wärmeausnutzung, bei einem Latentwärmespeicher, welcher hinsichtlich einer Kältespeicherung ausgenutzt wird, ergeben sich etwa sinngemäß gleiche Verhältnisse, jedoch mit einer anderen Schichtung der Medien, wie weiter unten noch im einzelnen erläutert). Der Latentwärmespeicher ermöglicht eine Eindüsung sukzessive folgend zu einer Aufschmelzfläche des Wärmespeichermediums. Die Erfindung nutzt also das an sich bekannte Eindüsen von Wärmeübertragungsmedium in das Wärmespeichermedium, führt dies jedoch nicht nur auf einer Ebene in dem Latentwärmespeicher durch, sondern nacheinander in verschiedenen Höhenstufen. Die Eindüsung erfolgt querschnittsmäßig kontinuierlich und radial proportional zum Wärmeeintrag in Richtung des Wärmespeichermediums, fortschreitend über ein abgestuftes Düsensystem. Bei sich empfehlender vertikaler Durchsetzung des Latentwärmespeichers mit einem Düsenrohr oder dgl. werden gleichsam sukzessive immer weitere Höhenstufen hinzugeschaltet. Die Hinzuschaltung geschieht hierbei in einfachster Weise dadurch, daß die Düsen, die zunächst noch mit verfestigtem Wärmespeichermedium umgeben sind, von unten durch die bereits aktiven Düsen freigeschmolzen werden. Es ist auch eine gewisse selbsttätige Freischmelzung der Düsen in den weiteren Stockwerken zu beobachten, jedoch ist dieser Effekt von untergeordneter Bedeutung, wenn nicht besondere Maßnahmen etwa hinsichtlich eines starken Druckes oder dgl. getroffen werden. Wesentlich ist auch, daß die Eindüsung praktisch über einen gesamten Querschnitt des Latentwärmespeichers jeweils gleichzeitig erfolgt und daß mit fortschreitender Verflüssigung des Wärmespeichermediums die Eindüsung über zunehmend mehrere Querschnitte bzw. mehrere Etagen erfolgt. Im Unterschied zu dem erwähnten Düsenrohr kann grundsätzlich auch nur eine einzelne Düse vorhanden sein, die in dem Latentwärmespeicher höhenmäßig verfahrbar ist (bzw. mehrere Düsen jeweils auf derselben Ebene). Durch das aufeinanderfolgende Eindüsen in verschiedenen Höhen bei einen gewissen Eindüsungsdruck, wozu weiter unten noch weitere Ausführungen folgen, läßt sich erreichen, daß die erforderlichen großen Aufschmelzflächen und daraus die höheren Aufschmelzgeschwindigkeiten erreichbar sind. Ein großer Bereich des Latentwärmespeichers wird praktisch gleichzeitig mit dem Wärmeübertragungsmedium beaufschlagt. Durch eine gezielte Einstellung der Sprühstrahlstärke läßt sich auch eine beachtliche Tiefenwirkung, ausgehend etwa von einer mittigen vertikalen Anordnung des Düsenrohres, erreichen. Überraschend hat sich gezeigt, daß bei einem solchen Latentwärmespeicher Leistungscharakteristiken zu erreichen sind, die solchen Latentwärmespeichern entsprechen, in welchen, wie oben näher erläutert, ein Unterdruck herrscht, ohne daß die hiermit erforderliche aufwendige Konstruktion erforderlich ist. In Ausgestaltung der Erfindung ist vorgesehen, daß die Eindüsung im Winkel zu einer Vertikalen durchführbar ist. Dies könnte bspw. dazu ausgenutzt werden, daß ein Düsenrohr oder eine vergleichbare Düseneinrichtung nicht selbst den gesamten Latentwärmespeicher durchsetzt, sondern durch die unterschiedliche winklige Anordnung der Düsen und damit der erzeugbaren Düsenstrahlen eine räumliche Beaufschlagung des Wärmespeichermediums erreichbar ist, auch wenn entsprechende Düseneinrichtungen bspw. nur von oben und von unten über einen bestimmten Abstand in das Wärmespeichermedium hineinragen. In diesem Zusammenhang ist bevorzugt, daß ein Eindüsungswinkel und ein Eindüsungsdruck so einstellbar sind - oder eingestellt sind -, daß sich in dem Wärmespeichermedium ein parabolischer Strahlverlauf einstellt, der bezüglich des Eindüsungsortes zumindest zunächst zu einer Überhöhung führt. Der Eindüsungswinkel und der Eindüsungsdruck sind natürlich abhängig von der erwünschten Tiefenwirkung, insbesondere anfänglichen Tiefenwirkung der Eindüsungsstrahlen, wenn das Wärmespeichermedium noch verfestigt ist. Weiter ist es in diesem Zusammenhang von Bedeutung den Sprühdruck und/oder die Sprühtemperatur geeignet einzustellen. Auch ist es bevorzugt, die Sprühmenge und/oder den Sprühdruck und/oder die Stahlaustrittsgeschwindigkeit des Wärmetransportmittels so einzustellen, daß ein Emulgieren von Wärmespeichermaterial und Wärmetransportmittel nicht erfolgt. Im Zusammenhang mit dem Sprüdruck ist es besonders bevorzugt, daß die Eindüsung über die Höhe mit einem unterschiedlichen Strömungswiderstand durchführbar ist. Sofern über die Höhe verteilt eine Mehrzhal von Düsen vorgesehen ist, ist es bevorzugt, daß die Düsen je nach Höhe einen unterschiedlichen Strömungswiderstand aufweisen. Hiermit läßt sich erreichen, daß, ausgehend von einem vollständig "eingefrorenen Zustand", zwar zunächst nur die untersten, sich noch im flüssigen Bereich befindlichen Düsen aktiviert sind, daß jedoch mit zunehmendem Aufschmelzen aufgrund des geringeren Strömungswiderstandes der höheren Düsen das Wärmeübertragungsmedium ganz überwiegend nur noch aus den höheren, gerade neu aufgeschmolzenen Düsen austritt. Der Strömungswiderstand höher angeordneter Düsen ist daher in diesem Zusammenhang bevorzugt geringer als der Strömungswiderstand niedriger angeordneter Düsen. Auch ist in weiterer Ausgestaltung vorgesehen, daß eine oder mehrere Düsenebenen abschaltbar sind. Zur Abschaltung einer Düse kann beispielsweise ein Rückschlagventil vorgesehen sein. Weiter ist es in diesem Zusammenhang bevorzugt, die Austrittsöffnungen oder Düsen so auszurichten, daß sich eine umlaufende Strömung in dem Wärmespeichermedium und/oder dem Wärmeübertragungsmedium einstellt. Es kommt also zu einer gewissen Zirkulation des gesamten Inhaltes des Latentwärmespeichers. Bei einem zylindrischen Latentwärmespeicher bildet sich bspw. eine Zirkulation um eine mittlere senkrechte Achse des Latentwärmespeichers aus. Wenn etwa nur ein Eindüsungsrohr vorhanden ist, bildet sich die Zirkulation bspw. um dieses Eindüsungsrohr herum aus. Dabei ist weiter bevorzugt, daß die sich in dem Latentwärmespeicher im Wärmespeichermedium und/oder dem Wärmeübertragungsmedium einstellende Strömung eine Vertikalkomponente aufweist. Die Vertikalkomponente kann insbesondere durch die Überhöhung beim Einströmen und die gegenwirkenden Absaugkräfte hervorgerufen sein. Dies führt über den gesamten Umfang dazu, daß sich in dem Latentwärmespeicher eine umlaufende und auf- und absteigende Strömung einstellt. Diese Strömung wirkt zuverlässig Verstopfungen durch mitgerissenes Wärmespeichermedium entgegen. Hierbei ist insgesamt auch bevorzugt, daß sich im ausgespeicherten Zustand, bei erstarrtem Wärmespeichermedium, mindestens eine Austrittsöffnung für das Wärmeübertragungsmedium unterhalb des Wärmespeichermediums befindet. Auch bei erstarrtem Wärmespeichermedium kann so aus mindestens einer Austrittsdüse immer Wärmeübertragungsmedium austreten. Das Wärmeübertragungsmedium strömt aufgrund der Schrägausrichtung dann von unten gegen das verfestigte Wärmespeichermedium. Im übrigen kann es auch vorteilhaft sein, die Austrittsöffnungen für das Wärmeübertragungsmedium in dem Düsenrohr oder dgl. vorzuheizen. Bspw. sogar elektrisch vorzuheizen. Im allgemeinen erfolgt die Aufheizung des Düsenrohres selbsttätig dadurch, daß Teilabschnitte dieses Düsenrohres sich ständig im Wärmeübertragungsmedium befinden und das Düsenrohr eine sehr gute Wärmeleitfähigkeit besitzt. In weiterer Einzelheit ist bevorzugt, daß zum Ein- und Ausspeichern unterschiedliche Düsenrohre vorgesehen sind. Während die Düsenrohre zum Einspeichern von Wärme, die also gegenüber erstarrtem Wärmespeichermedium ein Wärmeübertragungsmedium transportieren, das eine höhere Temperatur aufweist, von unten über eine Siphonausbildung sich nach oben in dem Latentwärmespeicher erstrecken, reicht es für ein zum Ausspeichern gedachtes Düsenrohr, das gegenüber verflüssigtem Wärmespeichermedium ein kühleres Wärmeübertragungsmedium transportiert, aus - und hat sich als vorteilhaft erwiesen -, wenn entsprechende Austrittsöffnungen nur in einem oberen Bereich des Latentwärmespeichers, etwas unterhalb des oberen Spiegels des Wärmespeichermediums, angeordnet sind. Durch das kältere Wärmeübertragungsmedium wird beim Austritt aus einem solchen Düsenrohr eine kugelartige Erstarrung von Wärmespeichermedium erreicht. Das austretende Wärmeübertragungsmedium löst einzelne Flüssigkeitstropfen aus, die, da sie kälter als das Wärmespeichermedium sind, rasch mit einer oberflächlichen Schicht von erstarrtem Wärmespeichermedium sich überziehen. Insgesamt sind diese Strukturen dann schwerer als das umgebende flüssige Wärmespeichermedium und sinken nach unten ab. In dem - oberen - Austrittsbereich des Wärmeübertragungsmediums bleibt also ziemlich bis zum Schluß des Ausspeichervorgangs verflüssigtes Wärmespeichermedium vorhanden. Insbesondere für den Einspeichervorgang können bevorzugt auch mehrere Düsenrohre, die etwa gleichmäßig über einen Querschnitt des Latentwärmespeichers verteilt sind, vorgesehen sein. Hierbei kann es auch noch vorteilhaft sein, die Austrittsöffnungen in den einzelnen Düsenrohren zueinander höhenmäßig versetzt vorzusehen. In weiterer Ausgestaltung ist vorgesehen, daß in einer Sprüheinrichtung, also bspw. einem vertikalen Düsenrohr, in einer Ebene mehrere, hinsichtlich einer Umfangsverteilung und/oder einer Winkelausrichtung unterschiedlich ausgerichtete Sprühdüsen ausgebildet sind. Im allgemeinen ist es bevorzugt, daß in der Umgebung der Düseneinrichtung, also hier des Düsenrohres, eine im wesentlichen gleichwertige Beaufschlagung mit Wärmetransportmedium erfolgt. Hinsichtlich der vertikalen Erstreckung bzw. der Frage, bis zu welcher Höhe die Düseneinrichtung den Latentwärmespeicher durchsetzt, ist es bevorzugt, daß die Sprüheinrichtung im geladenen oder ungeladenen Zustand des Latentwärmespeichers, in welchem eine vertikale Schichtung von Wärmeübertragungsmedium und Wärmespeichermedium gegeben ist, sowohl das Wärmeübertragungsmedium wie auch das Wärmespeichermedium durchsetzt. Insbesondere bei dem beispielhaft verwendeten Wärmespeichermedium Paraffin und dem Wärmeübertragungsmedium Wasser ist es bevorzugt, daß ein Düsenrohr den Latentwärmespeicher von unten nach oben durchsetzt, wobei das Düsenrohr an seinem oberen Ende geschlossen ist. Eine Absaugung des Wärmeübertragungsmediums erfolgt insbesondere im Zusammenhang mit dem zuvor beschriebenen Beispielsfall in einem unteren Bereich des Latentwärmespeichers. Der Absaugeinrichtung kann ein Filter vorgeschaltet sein. Im einzelnen kann die Absaugeinrichtung als Absaugring ausgebildet sein. Der Absaugring kann bspw. aus einem Absaugrohr mit sehr vielen gleichmäßigen Absaugbohrungen gebildet sein. Das Absaugrohr kann weiter mit einem Filterschlauch überzogen sein. Bezüglich des Latentwärmespeichers empfiehlt es sich weiter, daß oberhalb der Absaugeinrichtung - und sich bevorzugt über jeweils einen Gesamtquerschnitt erstrekkend - eine netzartige Einrichtung angeordnet ist. Hierbei ist es weiter bevorzugt, daß oberhalb der Absaugeinrichtung zunächst keine netzartige Einrichtung angeordnet ist, sondern eine Lochplatte, welche dem Randbereich des Speichers zugeordnete Öffnungen aufweist. Bei bevorzugter zylindrischer Ausbildung des Latentwärmespeichers sind diese Öffnungen auch bevorzugt in einer Kreislinie angeordnet. Im Zentrum ist die Platte vollständig geschlossen. Einzige Durchtrittsöffnungen sind die genannten äußeren Durchtrittsöffnungen. Die genannte netzartige Einrichtung hindert ein zu rasches Absinken von sich verfestigendem Wärmespeichermedium, insbesondere im Zustand des Ausspeicherns von Wärme. In diesem Zusammenhang empfiehlt es sich auch, mehrere derartige netzartige Einrichtungen übereinander anzuordnen. Eine Öffnungsgröße bzw. Maschenweite dieser netzartigen Einrichtungen nimmt geeigneterweise mit der Höhe des Latentwärmespeichers zu. In dem Latentwärmespeicher ist weiter oberhalb des Wärmespeichermediums ein Gasraum ausgebildet, in welchem bevorzugt gegenüber Atmosphärendruck zumindest ein leichter Überdruck herrscht. Dieser Gasraum kann bspw. mit einem der Umgebungsluft entsprechenden Gasgemisch oder Kohlendioxyd und/oder Stickstoff gefüllt sein. Einer Oxidationsneigung des Wärmespeichermediums kann hierdurch entgegengewirkt werden. Das Wärmespeichermedium kann neben dem bereits erwähnten Paraffin auch aus Polymeren, sonstigen Fetten oder Stearin bestehen. Bevorzugt ist, daß das Wärmespeichermedium im flüssigen Zustand eine hohe Viskosität aufweist. Darüber hinaus kann das Wärmespeichermedium bevorzugt einen leicht schmelzenden Anteil, bis bspw. zu 10 Vol% aufweisen. Das Wärmetransportmedium kann neben dem bereits erwähnten Wasser auch eine Flüssigkeit auf Alkoholbasis sein. Weiter bevorzugt ist das Wärmetransportmedium mit einem Emulsionsbrecher versetzt (nämlich grenzflächenaktive Stoffe wie ethoxilierte Nonylphenole, Odylphenole bzw. Fettalkohole). Erfindungswesentlich ist die Einhaltung eines bestimmten Verhältnisses der Volumina von Wärmespeichermedium und Wärmeübertragungsmedium. Bevorzugt sind die Verhältnisse im Bereich von 1:1 bis 3:1, also dreifache Menge an Wärmespeichermedium im Vergleich zum Wärmeübertragungsmedium. Dies ist im Zusammenwirken mit den vertikalen und horizontalen Strömungskräften mitbestimmend für einen angestrebten verstopfungsfreien Betrieb. Von Bedeutung ist in diesem Zusammenhang auch, daß zwischen dem Wärmespeichermedium und dem Wärmeübertragungsmedium ein hoher Dichteunterschied besteht, so daß sich jeweils eine klare Trennung zwischen Wärmespeichermedium und Wärmeübertragungsmedium ergibt. Vorzugsweise liegt dieser Dichteunterschied (Delta Rho) größer oder ist gleich 100 kg/m^{3.}

Eine weitere bevorzugte Ausführungsform der Erfindung sieht auch vor, daß das Wärmeübertragermedium gleichsam im Bypass zu einer möglichen Eindüsung über die Sprüheinrichtung auch unmittelbar in den Latentwärmespeicher eingespeist bzw. aus dem sie dann entnommen werden kann und zwar in dem Bereich, in welchem sich üblicher Weise ohnehin das Wärmeübertragermedium befindet. Hierzu ist bevorzugt bspw. eine Ringleitung in einer Ebene des Speichers vorgesehen, welche eine Mehrzahl von nach innen gerichteten Öffnungen aufweist, über welche die Entnahme bzw. Einspeisung des Wärmeübertragermediums erfolgen kann. Geeigneter Weise sind die Öffnungen auch so ausgerichtet, daß sie eine rotatorische Bewegung im Inneren des Latentwäremspeichers unterstützen bzw. initiieren. Hierbei kann es sich um eine rotatorische Bewegung des Wärmeübertragermediums alleine oder in Kombination mit dem Wärmespeichermedium handeln. Auch ist weiter bevorzugt vorgesehen, daß in dem Latentwärmespeicher eine Vorrichtung ausgebildet ist, welche Hohlstrukturen, die sich beim Eindüsen des Wärmespeichermediums ergeben, aufbricht. Wie in weiterer Einzelheit in dieser Anmeldung auch beschrieben, stellen sich beim Eindüsen des Wärmespeichermedium bevorzugt hohlkugelartige Strukturen ein, deren Mantel aus dem Wärmespeichermedium gebildet ist, die im Inneren jedoch Wärmeübertragermedium, also bspw. Wasser enthalten. Die Ausbildung dieser Strukturen und eine hierbei sich ergebende wandernde Grenzschicht ist ein Maß dafür, zu welchem Verhältnis der Latentwärmespeicher mit Wärmespeichermedium bzw. Wärmeübertragermedium gefüllt sein kann. In einer Vielzahl von Anmeldungsfällen ist es angestrebt, einen möglichst hohen Füllgrad in Bezug auf das Wärmespeichermedium zu erreichen. In diesem Zusammenhang ist die Zerstörung der angesprochenen Strukturen vorteilhaft. Im einzelnen kann dies neben den bereits weiter oben erwähnten Siebe unterschiedlicher Durchmesser, über die Höhe des Latentwärmespeichers verteilt, insbesondere auch eine stacheldrahtartige Struktur sein. Diese stacheldrahtartige Struktur kann so vorgesehen sein, daß sie sich über die Höhe wendelartig verjüngt, so daß die Strukturen gleichsam eine Trichterstruktur aus diesem Stacheldraht durchsetzen und hierbei zerstört werden.

Nachstehend ist die Erfindung des weiteren anhand der beigefügten Zeichnung, die jedoch lediglich ein Ausführungsbeispiel darstellt, erläutert. Hierbei zeigt:
- Fig. 1: einen Querschnitt durch einen Latentwärmespeichereiner ersten Ausführungsform;
- Fig. 2: eine vergrößerte Darstellung der Absaugeinrichtung im Bodenbereich des Latentwärmespeichers gemäß Fig.1;
- Fig. 3: eine schematische Querschnittsdarstellung eines Latentwärmespeichers einer zweiten Ausführungsform, zu Beginn eines Ausspeicherns von Wärme;
- Fig. 4: den Latentwärmespeicher gemäß Fig. 3 im kalten Zustand;
- Fig. 5: den Latentwärmespeicher gemäß Fig. 3 in einem Zustand des Einspeicherns von Wärme, bei verflüssigtem Wärmespeichermedium;
- Fig. 6: den Latentwärmespeicher gemäß Fig. 3 in einem im Zuge des Ausspeicherns von Wärme auftretenden Übergangszustand;
- Fig. 7: eine Einzeldarstellung von Wärmespeichermaterial-Kugelstrukturen;
- Fig. 8: einen Querschnitt durch den Latentwärmespeicher gemäß Fig. 3, geschnitten entlang der Linie VIII-VIII;
- Fig. 9: ein Latentwärmespeicher dritter Ausführungsform, in schematischer Darstellung, als Kälte-Latentwärmespeicher;
- Fig. 10: ein Latentwärmespeicher vierter Ausführungsform, mit einer Bypasseinrichtung für das Wärmeübertragermedium und einer Vorrichtung zur Zerstörung entstehender Hohlstrukturen.
Dargestellt und beschrieben ist ein Latentwärmespeicher 1, der mit einem Wärmespeichermedium 2 und einem Wärmeübertragungsmedium 3 gefüllt ist. Bei dem Wärmespeichermedium 2 handelt es sich um paraffinische Kohlenwasserstoffe und bei dem Wärmeübertragungsmedium 3 um Wasser, das mit einem Emulsionsbrecher versetzt ist.

Der Latentwärmespeicher 1 ist insgesamt zylindrisch ausgebildet.

In der Mitte des Latentwärmespeichers 1 ist ein vertikal ausgerichtetes Sprührohr 4 angeordnet, das einen Boden 5 des Latentwärmespeichers 1 durchsetzt. Mittels einer Pumpe 6 wird das Wärmeübertragungsmedium 3 in Pfeilrichtung in den Latentwärmespeicher 1 gefördert und tritt dort an Sprühdüsen 7 aus, die in Höhenrichtung des Latentwärmespeichers 1 verteilt und in verschiedenen Höhen angeordnet sind.

Durch die Pfeile 8 ist angedeutet, daß die Sprühstrahlen etwa parabolisch verlaufen, mit einer Überhöhung U bezüglich einer Sprühstrahl-Austrittsebene E in einer bestimmten Höhe H des Latentwärmespeichers 1.

In einer Ebene E können eine Vielzahl von Sprühdüsen 7 über den Umfang verteilt vorgesehen sein. An seinem oberen Ende 9 ist das Sprührohr verschlossen.

In einem oberen Bereich 10 des Latentwärmespeichers 1 ist ein Gasraum ausgebildet, der beim Ausführungsbeispiel mit Luft unter leichtem Überdruck gefüllt ist. An der Decke 11 des Latentwärmespeichers 1 ist weiter ein Füllventil 12 für eine Befüllung des Raumes 10 mit dem Gas vorgesehen. Darüber hinaus ein Füllventil 13 zur Einfüllung von Wärmetransportmedium und Wärmespeichermedium.

Weiter sind über die Höhe des Latentwärmespeichers 1 verteilt Netz- bzw. Gittereinrichtungen 14, 14', 14" vorgesehen, die mit zunehmender Höhe eine größere Maschenweite aufweisen. Das Gitter 14 besitzt also eine größere Maschenweite als die Gitter 14' und 14" und das Gitter 14' eine kleinere Maschenweite als das Gitter 14, jedoch eine größere Maschenweite als das Gitter 14'. Diese Gitter dienen als Abbrems- bzw. Ablagerungsvorrichtungen für erstarrendes, von oben nach unten absinkendes Paraffin bei einer Wärmeausspeicherung.

Im unteren Bereich des Latentwärmespeichers 1 sind zeichnerisch erstarrte "gestapelte" Strukturen S des Paraffins angedeutet.

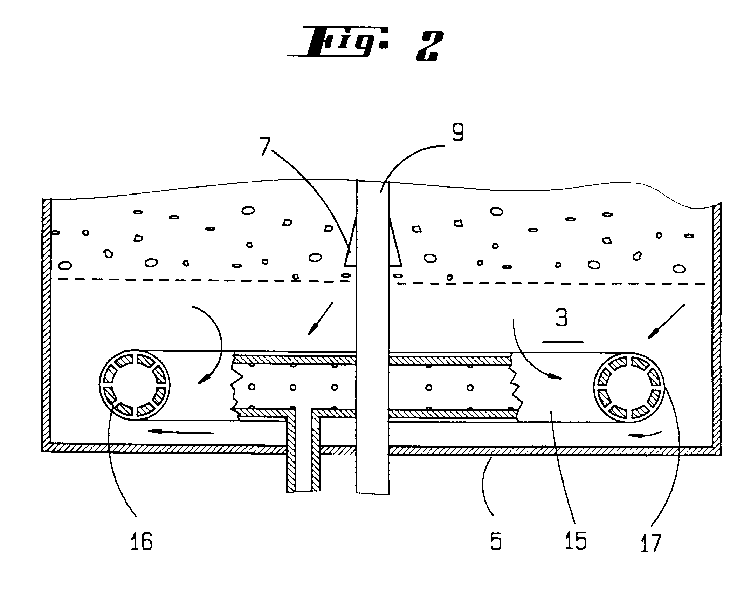

Weiter ist im Bodenbereich des Latentwärmespeichers 1 eine Absaugeinrichtung in Form eines Absaugringes 15 vorgesehen, welcher über seine Länge verteilte Absaugöffnungen 16 aufweist (vgl. insbesondere Fig. 2). Weiter ist der Absaugring 15 von einem Filterschlauch 17 überzogen, um ein Eindringen von Paraffin in die Absaugeinrichtung zu verhindern. Die Absaugeinrichtung dient nur zur Rückführung des Wärmetransportmediums. Von der Absaugeinrichtung 15 wird das Wärmeübertragungsmedium über die Leitung 18 in dem Wärmetauscher 19 geführt. Hier kann Wärme aus-bzw. eingekoppelt werden. Weiter wird dann über die bereits erwähnte Pumpe 6 das Wärmeübertragungsmedium wieder in den Latentwärmespeicher 1 zurückgefördert.

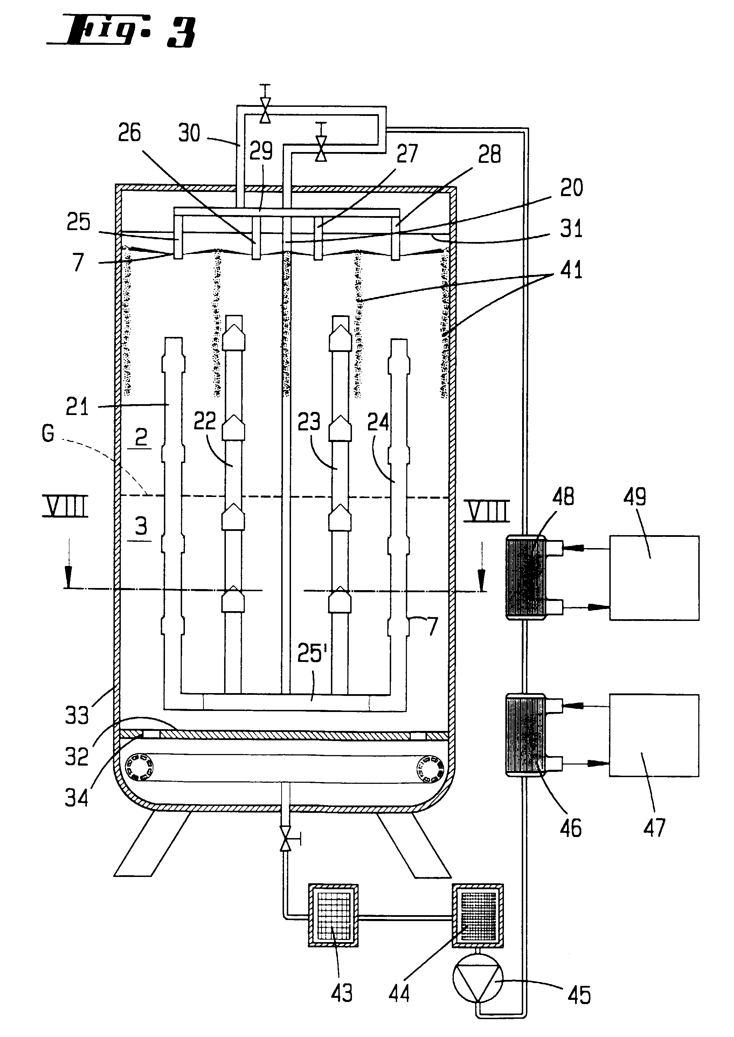

Mit Bezug zu Fig. 3 ist eine weitere Ausführungsform des Latentwärmespeichers dargestellt.

Bei diesem Latentwärmespeicher 1 ist zunächst zu erkennen, daß eine etwa hälftige Füllung mit Wärmespeichermedium 2 und Wärmeübertragungsmedium 3 vorgesehen ist. Diese anteilsmäßig sehr hohe Füllung mit Wärmeübertragungsmedium 3 ist auch für sich von wesentlicher Bedeutung. Hierdurch besitzt ein solcher Latentwärmespeicher 1 auch bedeutende Eigenschaften hinsichtlich einer Überhitzung, wenn über die Schmelztemperatur des Wärmespeichermediums 2 Wärme eingespeichert wird. Diese läßt sich verhältnismäßig günstig in dem Wärmeübertragungsmedium 3, jedenfalls wenn dieses Wasser ist, speichern. Dies ist auch von Bedeutung für den zweckmäßig kombinierten Betrieb von sensiblen Wärmespeicher und Latentwärmespeicher. Die Vorteile beider Systeme bleiben erhalten. Oberhalb der Verflüssigungstemperatur des Wärmespeichermediums, insbesondere des Paraffins, ist nämlich die Wärmespeicherfähigkeit von Wasser pro Grad K günstiger als die des Wärmespeichermediums.

Der Wärmespeicher 1 gemäß Fig. 3 besitzt für den Einspeichervorgang ein mittleres Zuführrohr 20, durch welches das Wärmeübertragungsmedium zugeführt wird und in einzelne Sprührohre 21, 22, 23 und 24 verteilt wird. Wesentlich ist, daß das Wärmeübertragungsmedium von dem Zuführrohr jeweils über einen Siphonabschnitt 25' strömt, der sich unterhalb eines untersten Niveaus einer Sprühdüse 7 erstreckt. Auch bei einem Stillstand der Anlage bzw. wenn über das Zuführrohr 20 kein Wärmeübertragungsmedium mehr gefördert wird, kann kein Wärmespeichermedium, insbesondere Paraffin, über die Sprührohre 21 bis 24 und das Zuführrohr 20 in den Kreislauf gelangen. Da jedenfalls Paraffin leichter ist als Wasser, wird das Paraffin in dem angesprochenen Ruhezustand die Grenzschicht G zwischen dem Wärmespeichermedium und dem Wärmeübertragungsmedium nach unten nicht überschreiten.

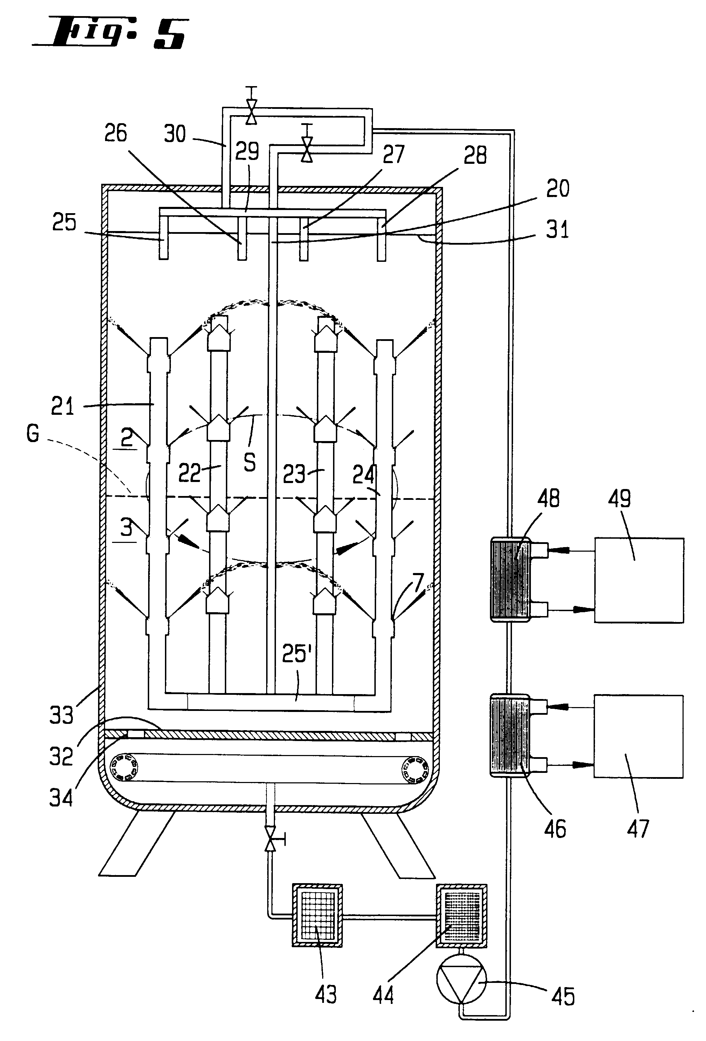

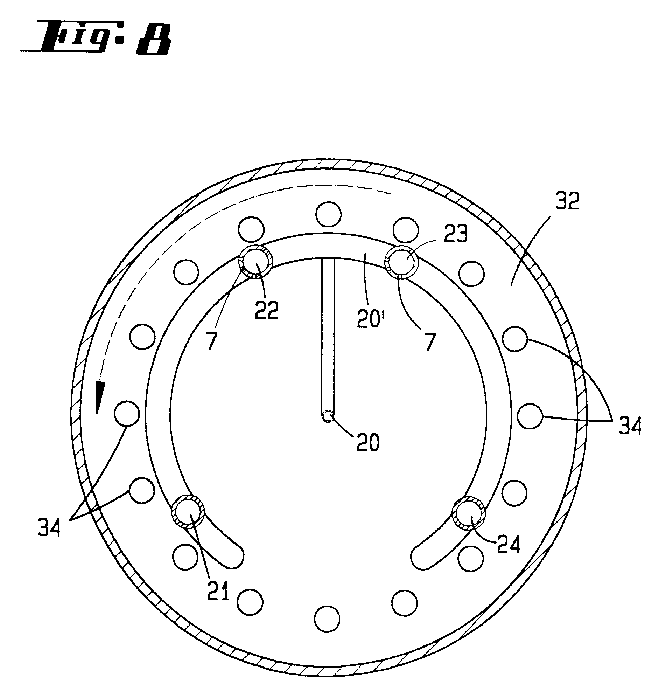

Von wesentlicher Bedeutung ist weiterhin, daß die Sprühdüsen 7 derart ausgerichtet sind, daß sich insgesamt in dem Latentwärmespeicher 1 eine rotierende Strömung etwa gemäß dem Pfeil S in Fig 5 bzw. Fig. 8 ergibt. Zudem ist durch die gewünschte und eingestellte Vertikalkomponente der Sprühstrahlen auch ein Vertikalanteil in der sich einstellenden Strömung enthalten. Über den Querschnitt des Latentwärmespeichers 1 ergeben sich somit auf- und abwärts gerichtete Strömungsanteile.

Während das Zuführrohr 20 und die Sprührohre 21 bis 24 für den Einspeichervorgang von Bedeutung sind, d.h. die Zuführung von warmen Wärmeübertragungsmedium in den relativ kalten Speicher 1, ist für den Ausspeichervorgang eine gesonderte Einrichtung vorgesehen. Im einzelnen sind dies Düsenrohre 25 bis 28, die an ein Verteilrohr 29 angeschlossen sind. Das Verteilrohr 29 wird über ein Zulaufrohr 30 gespeist. In den Düsenrohren 25 bis 28 sind gleichfalls Sprühdüsen 7 ausgebildet. Wesentlich ist, daß diese Sprühdüsen 7 sich nur wenig unterhalb einer Oberfläche 31 des Wärmespeichermediums 2 befinden. Über die Sprühdüsen 7 in den Düsenrohren 25 bis 28 wird zum Ausspeichern kaltes Wärmeübertragungsmedium 3 (kalt im Vergleich zu der Temperatur des Wärmespeichers 1) ausgedüst. Die sich hierbei ergebenden Vorgänge sind nachstehend mit Bezug zu den Fig. 3, 6 und 4 erläutert.

Im unteren Bereich des Wärmespeichers 1 ist oberhalb der Absaugeinrichtung - Absaugring 15 mit Absaugöffnungen 16 - ein Lochboden 32 angeordnet. In dem Lochboden 32 sind nahe einer äußeren Wand 33 des Latentwärmespeichers 1 Durchgangsöffnungen 34 ausgebildet. Diese sind auf einer Kreislinie umfangsmäßig verteilt vorgesehen. Im übrigen ist der Lochboden 32 undurchdringlich.

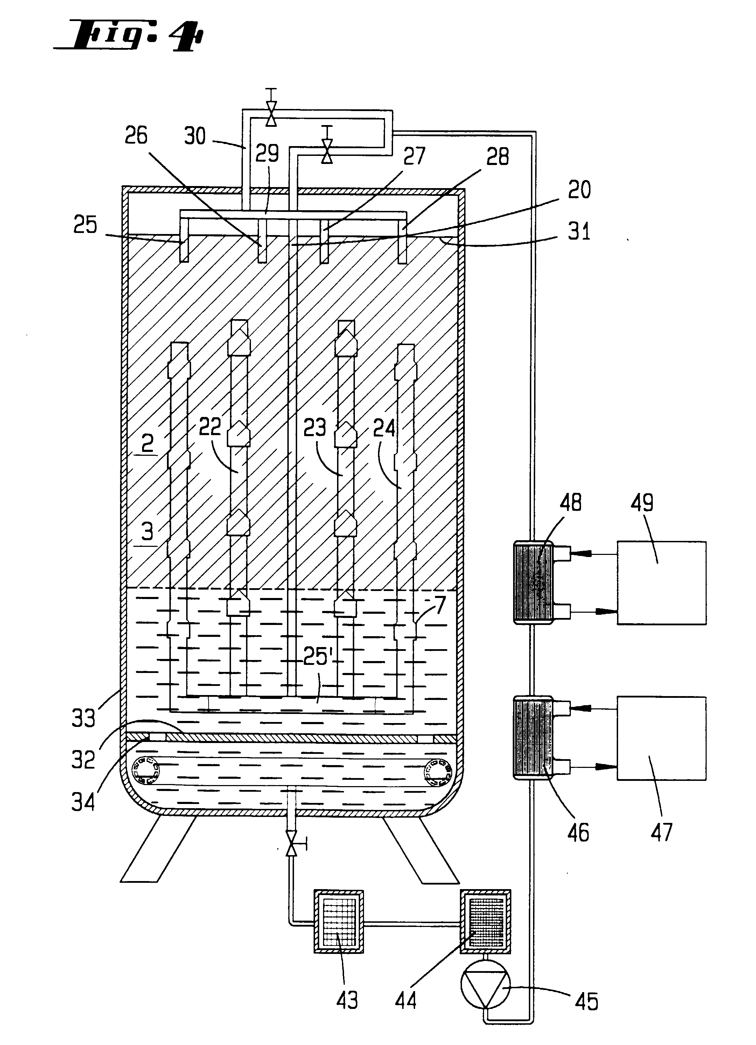

Hinsichtlich der Sprührohre 21 bis 24 ist weiterhin von Bedeutung, daß die Sprühdüsen 7 in den einzelnen Sprührohren 21 bis 24 höhenmäßig unterschiedlich angeordnet sind. Hiermit läßt sich eine noch bessere Aufschmelzcharakteristik beim Einspeichern erhalten. Auch ist von Bedeutung, daß jedenfalls eine untere Sprühdüse 7 sich im erstarrten Zustand des Wärmespeichermediums 2 unterhalb einer Trennebene zwischen dem Wärmespeichermedium 2 und dem Wärmeübertragungsmedium 3 befindet (vgl. Fig. 4, wo dies bezüglich aller unteren Sprühdüsen 7 der Fall ist). Bei einem Einspeichern von Wärme stellt sich jedenfalls bezüglich dieser unteren Sprühdüsen 7 dann sogleich eine Sprühcharakteristik ein, wie sie bspw. in Fig. 5 angedeutet ist. Diese unteren Sprühdüsen 7 tragen dann mit dazu bei, daß das erstarrte Wärmespeichermedium rasch von unten her aufgeschmolzen wird.

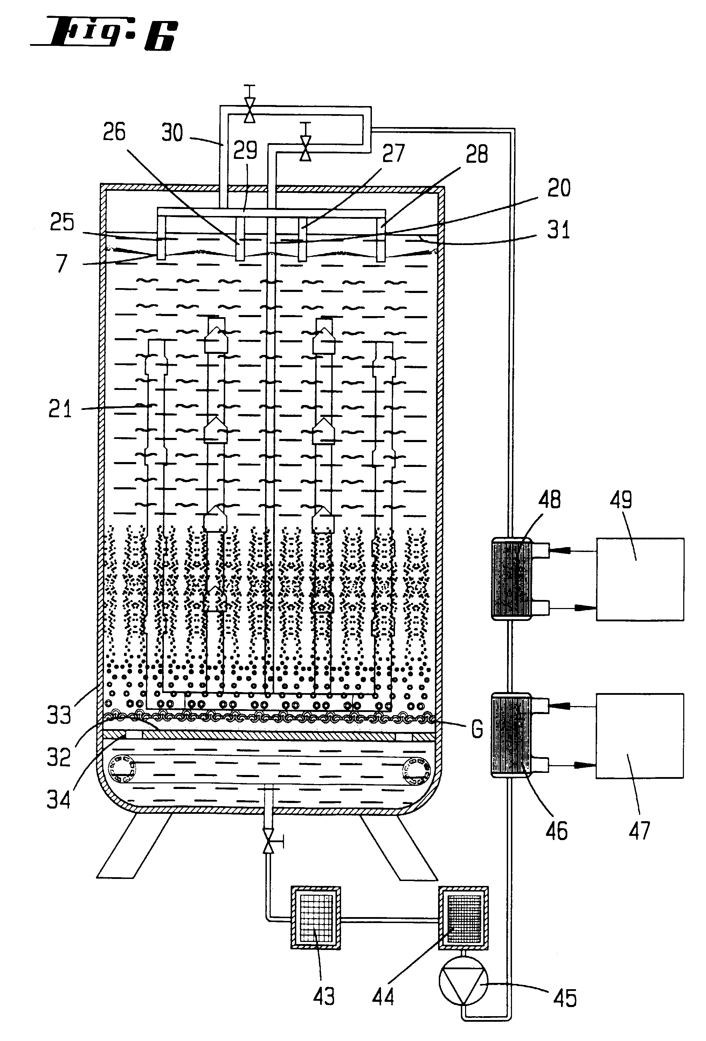

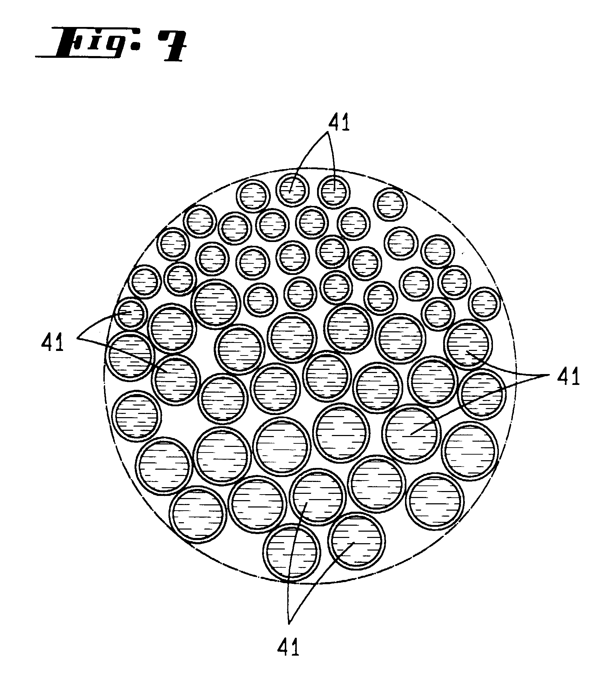

In Fig. 6 ist ein Übergangszustand bei einem Ausspeichervorgang dargestellt. Beim Ausspeichern von Wärme aus dem Latentwärmespeicher 1 wird relativ kaltes Wärmeübertragungsmedium 3 durch die Sprühdüsen 7 der Düsenrohre 25 bis 28 eingedüst. Der Beginn eines solchen Ausspeichervorganges ist in Fig. 3 dargestellt. Aufgrund des relativ kalten Wärmeübertragungsmediums, das durch die Düsenrohre 25 bis 28 in das Wärmespeichermedium 2 eingedüst wird, umhüllen sich Tropfen, in welchen das Wärmeübertragungsmedium nach einer kurzen Eindüsungsstrecke zerfällt, mit erstarrtem Wärmespeichermedium. Die so gebildeten relativ schweren Strukturen sinken nach unten ab. In Fig. 3 ist dies durch die Anhäufungen von Kugelstrukturen 41, wie sie in Fig. 7 in weiterer Einzelheit dargestellt sind, angedeutet. Diese Eigenschaft des beschriebenen Latentwärmespeichers ermöglicht es auch, daß die Düsen 7 der Düsenrohre 25 bis 28 nur im oberen Bereich, nahe der Oberfläche 31 des Wärmespeichermediums angeordnet sind. Überraschenderweise hat sich gezeigt, daß bis zum Ende des Ausspeichervorganges diese Düsen 7 frei bleiben und auch sich Wege ausbilden, über welche eine Zirkulation (Durchsickern von oben nach unten) des Wärmeübertragungsmediums bis zum Ende des Ausspeichervorganges erhalten bleiben. Aufgrund der relativen Kälte des Wärmeübertragungsmediums bilden sich, wenn die Temperatur unterhalb der Erstarrungstemperatur des Wärmespeichermediums ist, um die einzelnen Tropfen, insbesondere Wassertropfen, des Wärmeübertragungsmediums ein Mantel von erstarrtem Wärmespeichermedium. Es ergeben sich mithin die kugelartigen Strukturen 41 gem. Fig. 7, die im Inneren mit Wärmeübertragungsmedium gefüllt sind. Diese Strukturen sind schwerer als das umgebende Wärmespeichermedium und sinken daher nach unten ab. Mit zunehmender Dauer dieses Vorgangs reichern sich diese Strukturen im unteren Bereich des Wärmespeichermediums an. Da ein erheblicher Anteil des Wärmeübertragungsmediums in diesen Strukturen eingeschlossen ist, nimmt das verbliebene Wärmeübertragungsmedium volumenmäßig ab. Die Grenzschicht G zwischen dem Wärmespeichermedium 2 und dem Wärmeübertragungsmedium 3 wandert nach unten. Mit zunehmender Wanderung dieser Grenzschicht G ergibt sich aber auch ein zunehmender Druck auf die, wie bereits vorstehend beschrieben, gebildeten Strukturen. Dieser Vorgang nimmt zu bis hin zu einer Konfiguration, wie sie in Fig. 6 dargestellt ist. Die Grenzschicht G ist bis nahe an die Lochplatte 32 abgesunken. Dies stellt das äußere Wachstum der Grenzschicht G zwischen dem Wärmespeichermedium 2 und dem Wärmeübertragungsmedium 3 dar. Das Verhältnis zwischen Wärmespeichermedium 2 und Wärmeübertragungsmedium 3 wird im Hinblick auf die Wanderung der Grenzschicht G bei einem solchen Ausspeichervorgang auch bevorzugt danach gewählt, daß die Grenzschicht G sich auch bei ihrem niedrigsten Niveau noch oberhalb des Lochbodens 32, oder gerade auf diesem aufliegend, einstellt. Der Anteil des Wärmespeichermediums 2 soll nicht so hoch sein, daß sich bei diesem Übergangsvorgang eine Wanderung oder eine Tendenz zur Wanderung der Grenzschicht G zwischen dem Wärmespeichermedium 2 und dem Wärmeübertragungsmedium 3 über den Lochboden 32 hinaus ergibt. Damit werden Verstopfungen und Wärmeminderleistungen im Wärmezufuhrsystem/Wärmeabnahmesystem zuverlässig ausgeschlossen.

Etwa in diesem Zustand wird der Druck auf die kugelartigen Strukturen 41 so groß, daß diese beginnen aufzubrechen. In Fig. 6 ist dies auch bezüglich der untersten Schicht des Wärmespeichermediums 2 bereits angedeutet. Die Bruchstücke des Wärmespeichermediums 2, die sich hierdurch ergeben (die selbstverständlich nicht so geometrisch gleichgestaltet sind, wie dies etwa der Fig. 6 evtl. zu entnehmen ist), führen auch zu einer makroskopisch durchlässigen Struktur des Wärmespeichermediums nach diesen Aufbruchvorgängen. Die Bestandteile aufgebrochener Strukturen separieren sich entsprechend ihrer Dichten. Das zuvor in den Strukturen gefangen gewesene Wärme; übertragungsmedium wird wieder frei, so daß sich insgesamt die Grenzschicht G wieder nach oben bewegt. Im vollständig erstarrten Zustand des Wärmespeichermediums 2 ergibt sich dann wieder eine Konfiguration, wie sie in Fig. 4 dargestellt ist.

In Fig. 5 ist ein Zustand des Einspeicherns dargestellt, bei bereits vollständig geschmolzenem Wärmespeichermedium 2. Lediglich der Übersichtlichkeit halber ist bezüglich der Sprühdüsen 7 in den Sprührohren 21 bis 24 nur auf dem untersten und obersten Niveau die sich ergebenden Sprühstrahlen - wenn auch schematisch - vollständig ausgezeichnet. Bezüglich der anderen Sprühdüsen 7 ist ein Strahlverlauf angedeutet.

Aus der Querschnittsdarstellung gemäß Fig. 8 ist zu entnehmen, daß das Zuführrohr 20 bevorzugt zentral angeordnet ist, von welchem sodann über ein unteres Verteilrohr 20' eine Einspeisung des Wärmeübertragungsmediums in die einzelnen Sprührohre 21 bis 24 erfolgt. Diese sind außerhalb des Zentrums des Latentwärmespeichers, etwa in einem Abstand von 1/3 Radius zu einer Außenwandung des Latentwärmespeichers, bevorzugt angeordnet. In Fig. 8 ist auch schematisch angedeutet, daß sich eine Kreisströmung S aufgrund der Ausrichtung der Sprühdüsen 7 vorzugsweise ergibt. Hierzu kann es auch vorteilhaft sein, über den Umfang unsymmetrisch verteilt die Sprühdüsen 7 bzw. ein-zelne Austrittsöffnungen zu sehen.

Die beschriebene Struktur der kugelartigen Körper 41 (Fig. 7), die zunächst teilweise bei fortschreitender Ausspeicherung von Wärme zu einem bestimmten Zeitpunkt aber auch im großen Umfang nahezu gleichzeitig aufbrechen, ist auch von kombinativer Bedeutung im Hinblick auf die Strukturierung des Wärmespeichermediums 2, insbesondere wenn dieses Paraffin ist, im Sinne der eingangs erwähnten konusartigen Gestaltung des Wärmespeichermediums 2, wie dies im einzelnen in der Patentanmeldung P 43 07 065 beschrieben ist. Während die Aufbruchcharakteristik eine makroskopisch durchlässige Struktur ergibt, ist die im Bereich der Kristallstrukturen gegebene konusartige Gestaltung für ein gleichsam schwammartiges Verhalten des Wärmespeichermediums verantwortlich. Es ergeben sich auch im mikroskopischen Bereich eben Durchdringungswege für das Wärmeübertragungsmedium in dem Wärmespeichermedium. Im übrigen ergeben sich mit dem Zusammenbrechen der beschriebenen kugelförmigen Strukturen auch noch vergleichsweise große Strömungswege für das Wärmeübertragungsmedium in dem erstarrenden oder erstarrten Wärmetransportmedium, so daß die Aus speicherung mit nahezu unveränderter Wärmeleistung bis zum Schluß vorgenommen werden kann. Dies trotz sich einstellendem teigigen bzw. hochzähem Zustand des Wärmespeichermediums.

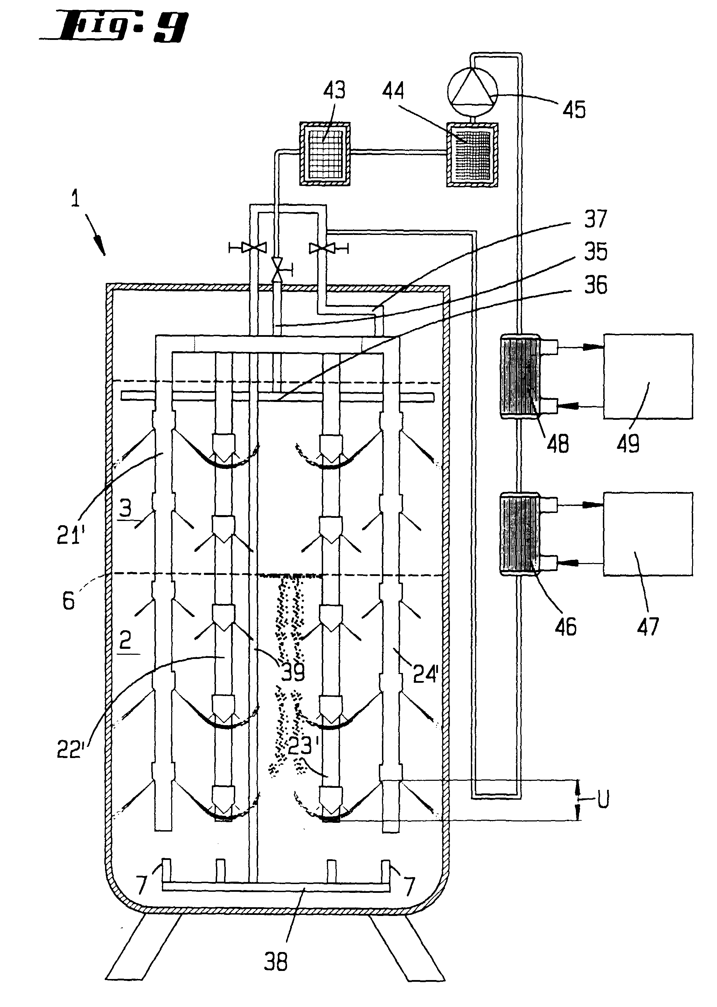

In Fig. 9 ist ein Latentwärmespeicher 1 im Hinblick auf eine Kälteanwendung dargestellt. Bei dieser Ausgestaltung ist als Wärmeübertragungsmedium 3 ein Medium auf Alkoholbasis gewählt und als Wärmespeichermedium 2 wiederum ein solches auf Paraffinbasis. Auch hier ist ein Absaugring mit vielen Bohrungen vorgesehen. Dadurch ergeben sich geringe vertikale Kräfte. Es sind lange "Strudelwege" des abgesaugten Wärmeübertragungsmediums geschaffen.

Da das Wärmeübertragungsmedium 3 hier spezifisch leichter ist als das Wärmespeichermedium 2, sammelt sich das Wärmeübertragungsmedium 3 oberhalb des Wärmespeichermediums 2. Dies vereinfacht auch die Absaugung des Wärmeübertragungsmediums. Es ist lediglich eine Absaugleitung 35 erforderlich, deren Mündung 36 in das Wärmeübertragungsmedium 3 hineinreicht.

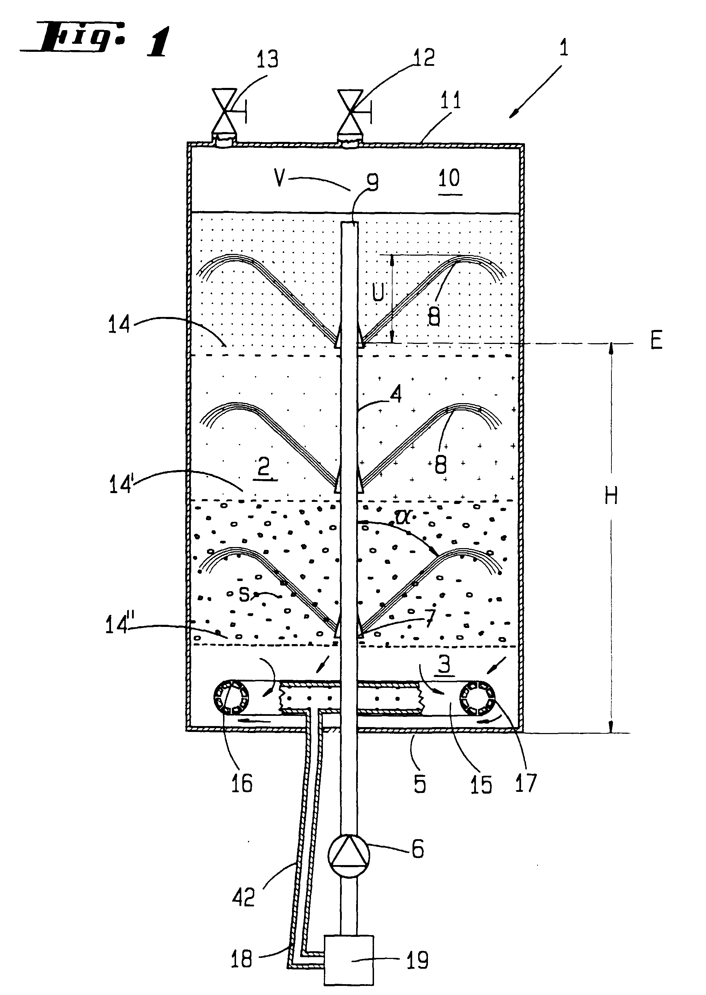

Zum Einspeisen von Wärme in den Latentwärmespeicher 1 gemäß Fig. 9 ist eine Einspeiseleitung 37 vorgesehen, wobei hier entsprechend den Sprührohren 21 bis 24 Sprührohre 21' bis 24' vorgesehen sind, mit einer Vielzahl von Sprühdüsen 7 auf unterschiedlichen Ebenen bis in den Bodenbereich 38 des Wärmespeichers 1 gemäß Fig. 9 bevorzugt angeordnet sind. Die Sprühstrahlen treten hier in einem gleichen Winkel Alpha zur Vertikalen aus den Sprührohren aus, sind jedoch nach unten gerichtet. Aufgrund der Wichte-Unterschiede zwischen dem Wärmespeichermedium 2 und dem Wärmeübertragungsmedium 3 kehren die Sprühstrahlen sodann ihre Richtung um. In analoger Weise ergibt sich ein Überstand U, wie er in bezug auf einen Latentwärmespeicher 1 gemäß Fig. 1 weiter vorne bereits beschrieben ist.

Zum Ausspeichern von Wärme aus dem Latentwärmespeicher 1 gemäß Fig. 9 ist ein Sprührohr 39 vorgesehen, das in dem Bodenbereich 38 des Speichers 1 eine Quererstreckung mit einer Vielzahl von Sprühdüsen 7 aufweist. Es ist jedoch weiter auch möglich, daß auch bei dem Sprührohr 39 Sprühdüsen 7 auf einer Vielzahl von Ebenen vorgesehen sind.

Bei einem Ausspeichervorgang entsprechend der Darstellung gemäß Fig. 3 wird - relativ kaltes - Wärmeübertragungsmedium 3 aus den bodennahen Düsen 7 des Sprührohres 29 ausgedüst. Auch hierbei stellt sich der Effekt ein, daß das Wärmeübertragungsmedium 3 tropfenweise vereinzelt wird und sich mit einer Umhüllung aus verfestigten Wärmespeichermedium 2 umgibt. Aufgrund des spezifisch leichteren - eingeschlossenen - Wärmeübertragungsmediums 3 schwimmen diese Kugelstrukturen nach oben bis zu der Grenzschicht G. Die Grenzschicht G wird bei dieser Art von Latentwärmespeicher dann mit zunehmendem Ausspeichern von Wärme nach oben wachsen, bis sich auch hier ein Umbrucheffekt einstellt und die Grenzschicht G bis zur vollständigen Ausspeicherung von Wärme wieder nach unten absinkt. Es ergeben sich im übrigen analoge Vorgänge wie vorstehend beschrieben.

Um auch bei dieser Ausgestaltung ein effektives Einspeichern von Wärme in jedem Zustand des Latentwärmespeichers 1 zu ermöglichen, ist es insbesondere auch von Bedeutung, daß sich eine Sprühdüse 7 der Sprührohre 21' bis 24' oberhalb der Grenzschicht G zwischen dem Wärmeübertragungsmedium 3 und dem Wärmespeichermedium 2 im erkalteten Zustand des Wärmespeichermediums 2 befindet.

Bei allen Latentwärmespeichern 1 ist das Wärmeübertragungsmedium 3 in einem Kreislauf geführt, der teilweise außerhalb des Latentwärmespeichers 1 verläuft.

Über eine an den Absaugring 15 angeschlossene Absaugleitung 42 wird das Wärmeübertragungsmedium 2 aus dem Wärmespeicher 1 herausgeführt und - jetzt insbesondere erläutert mit Bezug zu Fig. 3 - über einen Vorfilter 43 und einen Hauptfilter 44 mittels einer Pumpe 45 zu einem ersten Wärmetauscher 46 geführt. An diesem Wärmetauscher 46 ist ein Verbraucherkreislauf 47 angeschlossen, bspw. eine übliche Heizungsanlage. Von dem Wärmetauscher 46 geht weiter eine Leitungsverbindung zu einem Wärmetauscher 48, an welchen ein üblicher Erzeugerkreislauf 49, bspw. ein Heizkessel mit Brenner angeschlossen ist. Von dem Wärmetauscher 48 wird das Wärmeübertragungsmedium sodann den Sprührohren 21 - 24 oder den Düsenrohren 25 bis 28 zugeleitet. In bezug auf einen Latentwärmespeicher 1 gemäß Fig. 3 ist bspw. der Erzeugerkreislauf 49 nicht eingeschaltet, solange Wärme aus dem Latentwärmespeicher 1 ausgespeichert wird und der Verbraucherkreislauf 47 nicht eingeschaltet, wohl aber der Erzeugerkreislauf 49, wenn Wärme in den Latentwärmespeicher 1 eingespeichert wird.

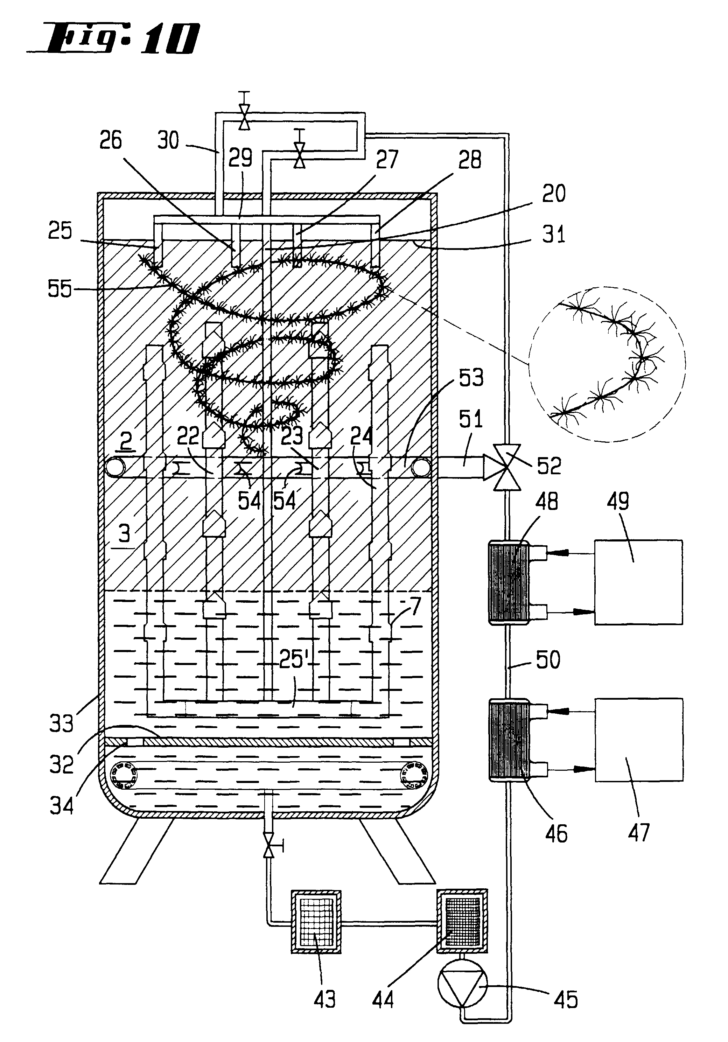

In Figur 10 ist eine weitere Ausführungsform des Latentwärmespeichers dargestellt.

Wesentlich ist hierbei, daß in der Leitungsverbindung 50, nachfolgend zu dem Wärmetauscher 48, eine Bypassleitung 51 vorgesehen ist. In der Leitung 50 ist hierzu ein Bypassventil 52 eingebaut, das nach Bedarf geöffnet und geschlossen werden kann. Über die Bypassleitung 51 kann das Wärmeübertragermedium - also bspw. Wasser - im Bypass zu der Eindüsung über die Düsenrohre 25 bis 28 bzw. die Düsen 7 in den Latentwärmespeicher unmittelbar eingespeist werden. In gleicher Weise kann das Wärmeübertragermedium auf diesen Weg auch unmittelbar aus den Latentwärmespeichern entnommen werden.

Diese Vorrichtung ist bspw. bei folgenden Betriebsfällen von Bedeutung: das Latentwärmespeichermaterial ist in der Regel nur bis zu einer gewissen maximalen Übertemperatur oberhalb des Schmelzpunktes wirkungsvoll einsetzbar. Bspw. ist es bei einem Wärmespeichermaterial auf Basis von Paraffin oberhalb von Delta T=20 Kelvin zweckmäßiger, nur die sensible Wärme des Wärmeübertragermediums zu nutzen (etwa doppelte spezifische Wärme von Wasser gegenüber flüssigem Wärmespeichermedium auf Basis Paraffin). Über das temperaturgesteuerte Bypassventil 52 kann in diesem Zusammenhang oberhalb einer solchen Grenztemperatur die Umschaltung von Speicherbetrieb in einen Bypassbetrieb erfolgen. So können Wärmeüberangebote effektiv abgespeichert werden. Gleiches gilt auch für die Entnahme bei Lastspitzen des Verbrauchers. Der übliche Speicherbetrieb ist dann für den Grundlastbetrieb (Dauer-/Durchschnittsbetrieb) gedacht, das Flüssigkeitsreservoir in Form des Wärmeübertragermediums für den Spitzenbetrieb. Ein weitere praktischer Betriebsfall ist bspw. bei Solaranlagen gegeben. Nach einem abendlichen Verbrauch von Wärme kann bei einer Ausführungsform gemäß Figur 10 die Nachladung von angeheiztem Wasser - von einer gesonderten nicht dargestellten Heizungsanlage - in das Flüssigkeitsreservoir erfolgen. Hiermit ist zum einen genügend Wärme für den morgendlichen Verbrauch vorrätig, zum anderen kann nach einer morgendlichen Umschaltung auf das Sprühsystem, also einem Verschluß der Bypassleitung, - etwa über eine Schaltuhr - ein "Umladen" in den gesamten Latentwärmespeicher erfolgen, bei gleichzeitiger Absenkung der Speichermitteltemperatur. "Umladen" bedeutet hierbei ein Angleichen der Temperaturen des Wärmeübertragermediums und des Wärmespeichermediums (bei einem sich hierbei ggf. ergebenden Aufschmelzen und Überhitzen des Wärmespeichermediums). Das Umladen erfolgt durch den Wärmetransport aus dem Wärmeübertragermedium in das Wärmespeichermedium.

Gemäß einer weiteren vorteilhaften Ausgestaltung ist vorgesehen, daß im Inneren des Wärmespeichers die Bypassleitung 51 in eine Ringleitung 53 mündet, in welche ein-zelne, radial nach innen ausgerichtet Öffnungen 54 ausgebildet sind. Diese Öffnungen 54 sind bevorzugt derart ausgerichtet, daß durch eine Ausströmung von Wärmeübertragermedium aus diesen Öffnungen 54 eine rotatorische Bewegung des Wärmeübertragermediums/Wärmespeichermediums in dem Latentwärmespeicher initiiert oder unterstützt wird. Anstelle der dargestellten Ringleitung kann auch nur eine in Umfangsrichtung ausgerichtete Mündung der Bypassleitung 51 im Inneren des Latentwärmespeichers vorgesehen sein. Auch können die Öffnungen bzw. die Mündungen so vorgesehen sein, daß ein Austrittsstrahl jeweils - bevorzugt zusätzlich - leicht nach oben gerichtet ist. Die Sprühdüsenwirkung zum Aufschmelzen, insbesondere aber das Absinken des Latentwärmespeichermediums bei einem Ausspeichervorgang wird hierdurch wirkungsvoll im Sinne eines schnelleren Aufschmelzens bzw. einer Minimierung des Absinkens beeinflußt. Es läßt sich für viele Anwendungsfälle ein günstigeres Verhältnis von Latentwärmespeichermaterial zu Wärmeübertragermedium erreichen.

Ein weiteres wesentliches Merkmal des Latentwärmespeichers gemäß Figur 10 ist eine wendelförmige Stacheldrahtstruktur 55. In der Lupendarstellung ist verdeutlicht, wie diese bspw. im einzelnen aussehen kann. Wesentlich ist, daß durch die Stacheldrahtstruktur 55 die sich ergebenden Hohlstrukturen (vergl. Fig. 7 und Erläuterung hierzu bzw. die Darstellung gemäß Fig. 3), bereits kurz nach dem Entstehen mit den spitzen Strukturen der Stacheldrahtstruktur 55 zusammentreffen und damit eine Zerstörung dieser Strukturen erreicht wird. Dieses führt vorteilhaft dazu, daß die untere Grenzschicht G (vergl. Fig. 3 und Fig. 6), nicht soweit absinkt, wie dies bei der Ausführungsform nach Figur 6 dargestellt ist. Umgekehrt ist es hierdurch möglich, den Anteil von Wärmespeichermedium am Gesamtvolumen des Latentwärmespeichers zu erhöhen. Die Vorrichtung zur Zerstörung der Hohlstrukturen kann natürlich auch in anderen Formen ausgebildet sein. Bspw. durch ein entsprechend den Düsen unmittelbar vorgeschaltetes Netz oder durch die weiter vorne bereits im Zusammenhang mit der Ausführungsform nach Figur 1 beschriebenen unterschiedlichen Siebe 14 über die Höhe des Latentwärmespeichers. Darüber hinaus kann bspw. auch an rotierende Messerstrukturen gedacht sein. Vorwiegend im Sinne einer überschaulichen zeichnerischen Darstellung ist die Stacheldrahtstruktur 55 mit einem zu großen Wendelabstand dargestellt. Dieser Abstand kann auch wesentlich kleiner sein, so daß praktisch keine unzerstörten Strukturen nach unten durchwandern können.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein.

## Patentansprüche

1. Latentwärmespeicher (1) mit einem Wärmespeichermedium (2) und einem Wärmeübertragungsmedium (3), wobei das Wärmeübertragungsmedium (3) über eine Düsenanordnung in das Wärmespeichermedium (2) zur Ein- und Auskopplung von Wärme eindüsbar ist, mit einer in Höhenrichtung des Latentwärmespeichers (1) verteilten Eindüsbarkeit in verschiedenen Höhen (H), dadurch gekennzeichnet, daß das Wärmespeichermedium (2) ein organisches Speichermaterial wie Wachs, Paraffin, Polymere, Fett oder Stearin ist, daß das Wärmeübertragungsmedium (3) in einer Schichtung unterhalb des Wärmespeichermediums (2) angeordnet ist und daß die Düsenanordnung zur Auskopplung der Wärme wenig unterhalb der Oberfläche des Wärmespeichermediums (2) angeordnet ist.

2. Latentwärmespeicher nach Anspruch 1,dadurch gekennzeichnet, daß die Eindüsung sukzessive folgend zu einer Aufschmelzfläche (Grenzschicht G) des Wärmespeichermediums (2) durchführbar ist.

3. Latentwärmespeicher nach einem oder mehreren der vorhergehenden Ansprüche, dadurch gekennzeichnet, daß die Eindüsung im wesentlichen über einen gesamten Querschnitt des Latentwärmespeichers (1) erfolgt und daß mit fortschreitender Verflüssigung des Wärmespeichermediums (2) die Eindüsung über zunehmend mehrere Etagen (Höhen H) erfolgt.

4. Latentwärmespeicher nach einem oder mehreren der vorhergehenden Ansprüche, dadurch gekennzeichnet, daß im wesentlichen gleichzeitig in verschiedenen Höhen (H) eine Eindüsung des Wärmeübertragungsmediums (3) erfolgt bzw. eine vorrichtungsmäßige Bereitschaft hierzu eingestellt ist.

5. Latentwärmespeicher nach einem oder mehreren der vorhergehenden Ansprüche, dadurch gekennzeichnet, daß die Eindüsung im Winkel zu einer Vertikalen durchführbar ist.

6. Latentwärmespeicher nach einem oder mehreren der vorhergehenden Ansprüche, dadurch gekennzeichnet, daß ein Eindüsungswinkel und ein Eindüsungsdruck so einstellbar sind - oder eingestellt sind -, daß sich in dem Wärmespeichermedium (2) ein parabolischer Strahlverlauf einstellt, der bezüglich des Eindüsungsortes zumindest zunächst zu einer Überhöhung (U) führt.

7. Latentwärmespeicher nach einem oder mehreren der vorhergehenden Ansprüche, dadurch gekennzeichnet, daß in dem Latentwärmespeicher (1) eine Vorrichtung ausgebildet ist zum Aufbrechen von sich im Zuge des Eindüsens von Wärmespeichermedium ergebenden Hohlstrukturen (41).

8. Latentwärmespeicher nach Anspruch 7, dadurch gekennzeichnet, daß die Vorrichtung eine wendelförmige Struktur aufweist.

9. Latentwärmespeicher nach Anspruch 7 oder 8, dadurch gekennzeichnet, daß die Vorrichtung aus einem Stacheldraht (55) gebildet ist.

10. Latentwärmespeicher nach einem oder mehreren der vorhergehenden Ansprüche, dadurch gekennzeichnet, daß ein Sprühdruck und/oder eine Sprühtemperatur so eingestellt sind, daß eine Durchsetzung des Speichermediums bis zum Behälterrand erfolgt.

11. Latentwärmespeicher nach einem oder mehreren der vorhergehenden Ansprüche, dadurch gekennzeichnet, daß eine Sprühmenge und/oder der Sprühdruck und/oder eine Strahlaustrittsgeschwindigkeit des Wärmetransportmediums so eingestellt sind, daß ein Emulgieren von Wärmespeichermedium und Wärmetransportmedium nicht erfolgt.

12. Latentwärmespeicher nach einem oder mehreren der vorhergehenden Ansprüche, dadurch gekennzeichnet, daß ein Volumenverhältnis zwischen dem Wärmespeichermedium (2) und dem Wärmeübertragungsmedium (3) zwischen 1:1 und 3:1 eingestellt ist.

13. Latentwärmespeicher nach einem oder mehreren der vorhergehenden Ansprüche, dadurch gekennzeichnet, daß in einer Sprüheinrichtung in einer Ebene E hinsichtlich einer Umfangsverteilung und/oder einer Winkelausrichtung unterschiedlich ausgerichtete Sprühdüsen (7) ausgebildet sind.

14. Latentwärmespeicher nach einem oder mehreren der vorhergehenden Ansprüche, dadurch gekennzeichnet, daß die Sprüheinrichtung im geladenen bzw. ungeladenen (Ruhe-) Zustand des Latentwärmespeichers (1) mit einer vertikalen Schichtung von Wärmeübertragungsmedium und Wärmespeichermedium sowohl das Wärmeübertragungsmedium als auch das Wärmespeichermedium durchsetzt.

15. Latentwärmespeicher nach einem oder mehreren der vorhergehenden Ansprüche, dadurch gekennzeichnet, daß die Sprüheinrichtung zumindest ein im wesentlichen vertikal angeordnetes Düsenrohr (4) aufweist, wobei die Düsen (7) radial ausgerichtet sind.

16. Latentwärmespeicher nach Anspruch 15, dadurch gekennzeichnet, daß das Düsenrohr (4) oben geschlossen ist.

17. Latentwärmespeicher nach einem oder mehreren der vorhergehenden Ansprüche, dadurch gekennzeichnet, daß eine Absaugung des Wärmeübertragungsmediums in einem unteren Bereich des Latentwärmespeichers (1) erfolgt.

18. Latentwärmespeicher nach Anspruch 17, dadurch gekennzeichnet, daß der Absaugeinrichtung ein Filter (17) vorgeschaltet ist.

19. Latentwärmespeicher nach Anspruch 17 oder 18, dadurch gekennzeichnet, daß ein Absaugring (15) ausgebildet ist.

20. Latentwärmespeicher nach Anspruch 19, dadurch gekennzeichnet, daß der Absaugring (15) als ein mit Absaugbohrungen (16) ausgestattetes Absaugrohr ausgebildet ist.

21. Latentwärmespeicher nach Anspruch 20, dadurch gekennzeichnet, daß das Absaugrohr mit einem Filterschlauch (17) überzogen ist.

22. Latentwärmespeicher nach einem oder mehreren der Ansprüche 17 bis 21, dadurch gekennzeichnet, daß in dem Latentwärmespeicher (1) oberhalb der Absaugeinrichtung (15) - und sich bevorzugt jeweils über einen Gesamtquerschnitt erstreckend - eine netzartige Einrichtung 14, 14', 14" angeordnet ist.

23. Latentwärmespeicher nach Anspruch 22, dadurch gekennzeichnet, daß mehrere netzartige Einrichtungen (14, 14', 14") übereinander angeordnet sind.

24. Latentwärmespeicher nach Anspruch 23, dadurch gekennzeichnet, daß eine Öffnungsgröße/Maschenweite der netzartigen Einrichtungen (14, 14', 14") mit der Höhe des Latentwärmespeichers (1) zunimmt.

25. Latentwärmespeicher nach einem oder mehreren der vorhergehenden Ansprüche, dadurch gekennzeichnet, daß in dem Latentwärmespeicher (1) oberhalb des Wärmespeichermediums (2) ein Gasraum (10) ausgebildet ist, in welchem gegenüber Atmosphärendruck zumindest ein leichter Überdruck herrscht.

26. Latentwärmespeicher nach Anspruch 25, dadurch gekennzeichnet, daß der Gasraum mit Kohlendioxyd und/oder Stickstoff und/oder Luft gefüllt ist.

27. Latentwärmespeicher nach einem oder mehreren der vorhergehenden Ansprüche, dadurch gekennzeichnet, daß das Wärmespeichermedium im flüssigen Zustand eine hohe Viskosität aufweist.

28. Latentwärmespeicher nach einem oder mehreren der vorhergehenden Ansprüche, dadurch gekennzeichnet, daß das Wärmespeichermedium einen leicht schmelzenden Anteil, bis bspw. zu 10 Vol% enthält.

29. Latentwärmespeicher nach einem oder mehreren der vorhergehenden Ansprüche, dadurch gekennzeichnet, daß das Wärmetransportmedium Wasser oder eine Flüssigkeit auf Alkohol-Basis ist.

30. Latentwärmespeicher nach einem oder mehreren der vorhergehenden Ansprüche, dadurch gekennzeichnet, daß das Wärmetransportmedium mit einem Emulsionsbrecher versetzt ist.

31. Latentwärmespeicher nach einem oder mehreren der Ansprüche 13 bis 30, dadurch gekennzeichnet, daß sich auch im ausgespeicherten Zustand, bei erstarrtem Wärmespeichermedium (2), mindestens eine Sprühdüse (7) für das Wärmeübertragungsmedium (3) unterhalb des Wärmespeichermediums (2) befindet, bzw. oberhalb des Wärmespeichermediums (2) befindet bei einem Kälte-Latentwärmespeicher.

32. Latentwärmespeicher nach einem oder mehreren der Ansprüche 13 bis 31, dadurch gekennzeichnet, daß die Sprühdüsen (7) für das Wärmeübertragungsmedium (3) vorheizbar sind.

33. Latentwärmespeicher nach einem oder mehreren der Ansprüche 13 bis 32, dadurch gekennzeichnet, daß die Sprühdüsen (7) für das Wärmeübertragungsmedium (3) so ausgerichtet sind, daß sich eine umlaufende Strömung in dem Wärmespeichermedium (2) und/oder dem Wärmeübertragungsmedium (3) einstellt.

34. Latentwärmespeicher nach einem oder mehreren der vorhergehenden Ansprüche, dadurch gekennzeichnet, daß die Strömung in dem Wärmespeichermedium (2) und/oder Wärmeübertragungsmedium (3) eine Vertikalkomponente aufweist.

35. Latentwärmespeicher nach einem oder mehreren der vorhergehenden Ansprüche, dadurch gekennzeichnet, daß zum Ein- und Ausspeichern unterschiedliche Einrichtungen, Sprührohre (21 bis 24) und Düsenrohre (25 bis 28), vorgesehen sind.

36. Latentwärmespeicher nach einem oder mehreren der Ansprüche 17 bis 35, dadurch gekennzeichnet, daß oberhalb der Absaugeinrichtung ein Lochboden (32) ausgebildet ist, der einer äußeren Wandung des Latentwärmespeichers (1) zugeordnete Durchgangsbohrungen (34) aufweist.

37. Latentwärmespeicher nach Anspruch 35 oder 36, dadurch gekennzeichnet, daß Sprühdüsen (7) der einzelnen Sprührohre (21 bis 24) höhenmäßig versetzt ausgebildet sind.

38. Latentwärmespeicher nach einem oder mehreren der Ansprüche 35 bis 37, dadurch gekennzeichnet, daß ein Sprührohr (21 bis 24), gegebenenfalls in Zusammenwirkung mit einem Zuführrohr (20) siphonartig ausgebildet ist.

39. Latentwärmespeicher nach einem oder mehreren der vorhergehenden Ansprüche, daß das Wärmeübertragermedium über eine Bypassleitung (51) bei Umgehung der Eindüsung in das Wärmespeichermedium unmittelbar in den Bereich des Wärmeübertragermediums einspeisbar bzw. aus diesem entnehmbar ist.

40. Latentwärmespeicher nach einem oder mehreren der vorhergehenden Ansprüche, daß im Bereich des Wärmeübertragungsmediums in dem Latentwärmespeicher eine Ringleitung (53) zur Einspeisung bzw. Entnahme von Wärmeübertragermedium vorgesehen ist.

41. Latentwärmespeicher nach Anspruch 39 oder 40, daß die Einspeisung von Wärmeübertragungsmedium im Bypass zu der Eindüsung derart erfolgt, daß eine rotatorische Bewegung des Mediums in dem Latentwärmespeicher ausgelöst bzw. unterstützt wird.

42. Latentwäremspeicher nach einem oder mehreren der vorhergehenden Ansprüche, dadurch gekennzeichnet, daß die Eindüsung über die Höhe des Latentwärmespeichers (1) mit einem unterschiedlichen Strömungswiderstand durchführbar ist.

43. Latentwärmespeicher nach einem oder mehreren der vorhergehenden Ansprüche, dadurch gekennzeichnet, daß über die Höhe (H) des Latentwärmespeichers (1) eine Mehrzahl von Düsen (7) vorgesehen ist und daß die Düsen (7) je nach zugeordneter Höhe (H) einen unterschiedlichen Strömungswiderstand aufweisen.

44. Latentwärmespeicher nach Anspruch 43, dadurch gekennzeichnet, daß der Strömungswiderstand höher angeordneter Düsen (7) geringer ist als der Strömungswiderstand niedriger angeordneter Düsen (7).

45. Latentwärmespeicher nach Anspruch 43 oder 44, dadurch gekennzeichnet, daß eine Düsenebene abschaltbar ist.

46. Latentwärmespeicher nach Anspruch 45, dadurch gekennzeichnet, daß eine Düse zur Abschaltung ein Rückschlagventil aufweist.

## Claims

1. Latent heat storage device (1) with a heat storage medium (2) and a heat transfer medium (3), wherein the heat transfer medium (3) can be injected via a nozzle assembly into the heat storage medium (2) for the input and output of heat, with an injection capacity at different heights (H), distributed in the vertical direction of the latent heat storage device (1), characterised in that the heat storage medium (2) is an organic storage material such as wax, paraffin, polymers, fat or stearin, in that the heat transfer medium (3) is arranged in stratification below the heat storage medium (2) and in that the nozzle assembly for the output of heat is arranged just below the surface of the heat storage medium (2).

2. Latent heat storage device according to claim 1, characterised in that injection can be carried out successively following a melt face (boundary layer G) of the heat storage medium (2).

3. Latent heat storage device according to one or more of the preceding claims, characterised in that injection takes place essentially over a whole cross-section of the latent heat storage device (1) and in that with progressive liquefaction of the heat storage medium (2) injection takes place over more and more stages (heights H).

4. Latent heat storage device according to one or more of the preceding claims, characterised in that essentially simultaneously at different heights (H) injection of the heat transfer medium (3) takes place or a stand-by state therefor with respect to apparatus is set.

5. Latent heat storage device according to one or more of the preceding claims, characterised in that injection can be carried out at an angle to a vertical.

6. Latent heat storage device according to one or more of the preceding claims, characterised in that an injection angle and an injection pressure can be or are set in such a way that a parabolic jet path which with respect to the point of injection at least initially leads to an increased height (U) arises in the heat storage medium (2).

7. Latent heat storage device according to one or more of the preceding claims, characterised in that in the latent heat storage device (1) is formed an apparatus for breaking up hollow structures (41) which arise in the course of injection of heat storage medium.

8. Latent heat storage device according to claim 7, characterised in that the apparatus has a spiral structure.

9. Latent heat storage device according to claim 7 or 8, characterised in that the apparatus is formed from barbed wire (55).

10. Latent heat storage device according to one or more of the preceding claims, characterised in that a spray pressure and/or a spray temperature are set in such a way that penetration of the storage medium takes place as far as the receptacle edge.

11. Latent heat storage device according to one or more of the preceding claims, characterised in that a spray quantity and/or the spray pressure and/or a jet exit speed of the heat transport medium are set in such a way that emulsification of heat storage medium and heat transport medium does not take place.

12. Latent heat storage device according to one or more of the preceding claims, characterised in that a volumetric ratio between the heat storage medium (2) and the heat transfer medium (3) between 1:1 and 3:1 is set.

13. Latent heat storage device according to one or more of the preceding claims, characterised in that differently oriented spray nozzles (7) are formed in a spray device in one plane E with respect to circumferential distribution and/or angular orientation.

14. Latent heat storage device according to one or more of the preceding claims, characterised in that the spray device in the charged or uncharged (rest) state of the latent heat storage device (1) with vertical stratification of heat transfer medium and heat storage medium penetrates both the heat transfer medium and the heat storage medium.

15. Latent heat storage device according to one or more of the preceding claims, characterised in that the spray device comprises at least one essentially vertically arranged nozzle pipe (4), the nozzles (7) being oriented radially.

16. Latent heat storage device according to claim 15, characterised in that the nozzle pipe (4) is closed at the top.

17. Latent heat storage device according to one or more of the preceding claims, characterised in that exhaustion of the heat transfer medium takes place in a lower region of the latent heat storage device (1).

18. Latent heat storage device according to claim 17, characterised in that in front of the exhauster is arranged a filter (17).

19. Latent heat storage device according to claim 17 or 18, characterised in that an exhauster ring (15) is formed.

20. Latent heat storage device according to claim 19, characterised in that the exhauster ring (15) is constructed as an exhauster pipe provided with exhauster bores (16).

21. Latent heat storage device according to claim 20, characterised in that the exhauster pipe is covered with a filter hose (17).

22. Latent heat storage device according to one or more of claims 17 to 21, characterised in that in the latent heat storage device (1) above the exhauster (15) - and preferably in each case extending over a whole cross-section - is arranged a net-like device (14, 14', 14").

23. Latent heat storage device according to claim 22, characterised in that several net-like devices (14, 14', 14") are arranged one above the other.

24. Latent heat storage device according to claim 23, characterised in that the opening/mesh size of the net-like devices (14, 14', 14") increases with the height of the latent heat storage device (1).

25. Latent heat storage device according to one or more of the preceding claims, characterised in that in the latent heat storage device (1) above the heat storage medium (2) is formed a gas chamber (10) in which compared with atmospheric pressure at least a slight excess pressure prevails.

26. Latent heat storage device according to claim 25, characterised in that the gas chamber is filled with carbon dioxide and/or nitrogen and/or air.

27. Latent heat storage device according to one or more of the preceding claims, characterised in that the heat storage medium has a high viscosity in the liquid state.

28. Latent heat storage device according to one or more of the preceding claims, characterised in that the heat storage medium contains a low-melting fraction, for example up to 10 vol.%.

29. Latent heat storage device according to one or more of the preceding claims, characterised in that the heat transport medium is water or an alcohol-based liquid.

30. Latent heat storage device according to one or more of the preceding claims, characterised in that the heat transport medium is mixed with an emulsion breaker.

31. Latent heat storage device according to one or more of claims 13 to 30, characterised in that in the extracted state, when the heat storage medium (2) is solidified, at least one spray nozzle (7) for the heat transfer medium (3) is located below the heat storage medium (2), or above the heat storage medium (2) in the case of a refrigerating latent heat storage device.

32. Latent heat storage device according to one or more of claims 13 to 31, characterised in that the spray nozzles (7) for the heat transfer medium (3) can be preheated.

33. Latent heat storage device according to one or more of claims 13 to 32, characterised in that the spray nozzles (7) for the heat transfer medium (3) are oriented in such a way that a revolving flow arises in the heat storage medium (2) and/or the heat transfer medium (3).

34. Latent heat storage device according to one or more of the preceding claims, characterised in that the flow in the heat storage medium (2) and/or the heat transfer medium (3) has a vertical component.

35. Latent heat storage device according to one or more of the preceding claims, characterised in that different devices, spray pipes (21 to 24) and nozzle pipes (25 to 28), are provided for storage and extraction.

36. Latent heat storage device according to one or more of claims 17 to 35, characterised in that above the exhauster is formed a perforated plate (32) comprising through-bores (34) associated with an outer wall of the latent heat storage device (1).

37. Latent heat storage device according to claim 35 or 36, characterised in that spray nozzles (7) of the individual spray pipes (21 to 24) are offset in height.

38. Latent heat storage device according to one or more of claims 35 to 37, characterised in that a spray pipe (21 to 24), if occasion arises in cooperation with a feed pipe (20), is of siphon-like construction.

39. Latent heat storage device according to one or more of the preceding claims, characterised in that the heat transfer medium can be supplied via a bypass pipe (51), bypassing injection into the heat storage medium, directly into the region of the heat transfer medium, or removed therefrom.

40. Latent heat storage device according to one or more of the preceding claims, characterised in that in the region of the heat transfer medium in the latent heat storage device is provided a ring pipe (53) for supply or removal of heat transfer medium.

41. Latent heat storage device according to claim 39 or 40, characterised in that the supply of heat transfer medium in the bypass for injection takes place in such a way that a rotational movement of the medium in the latent heat storage device is triggered or assisted.

42. Latent heat storage device according to one or more of the preceding claims, characterised in that injection can be carried out over the height of the latent heat storage device (1) with different flow resistance.

43. Latent heat storage device according to one or more of the preceding claims, characterised in that over the height (H) of the latent heat storage device (1) are provided a plurality of nozzles (7) and in that the nozzles (7) each have different flow resistance according to the associated height (H).

44. Latent heat storage device according to claim 43, characterised in that the flow resistance of higher nozzles (7) is lower than the flow resistance of lower nozzles (7).

45. Latent heat storage device according to claim 43 or 44, characterised in that one nozzle level can be shut off.

46. Latent heat storage device according to claim 45, characterised in that a nozzle comprises a non-return valve for shutting off.

## Revendications

1. Accumulateur de chaleur latente (1) comprenant un fluide ou milieu d'accumulation de chaleur (2) et un fluide ou milieu de transmission ou de transfert de chaleur (3), le fluide de transmission de chaleur (3) étant susceptible d'être injecté par un agencement de buses dans le fluide d'accumulation de chaleur (2) pour l'accouplement de stockage et de déstockage de la chaleur, et qui présente une capacité d'injection répartie à différentes hauteurs (H) dans le sens de la hauteur de l'accumulateur de chaleur latente (1), caractérisé en ce que le fluide d'accumulation de la chaleur latente (2) est un matériau organique d'accumulation tel que de la cire, de la paraffine, des polymères de la graisse ou de la stéarine, en ce que le fluide de transmission de chaleur (3), est disposé en une couche en dessous du fluide d'accumulation de chaleur (2) et en ce que l'agencement de buses pour l'accouplement de déstockage de la chaleur est disposé un peu en dessous de la surface supérieure du fluide d'accumulation de chaleur (2).

2. Accumulateur de chaleur latente selon la revendication 1, caractérisé en ce que l'injection par le jeu de buses est susceptible d'être réalisée de façons successives et se suivant sur une surface de fusion (couche de délimitation ou de séparation G) du fluide d'accumulation de chaleur (2).

3. Accumulateur de chaleur latente selon l'une ou plusieurs des revendications précédentes, caractérisé en ce que l'injection par les buses est réalisée sensiblement sur toute la section transversale de l'accumulateur de chaleur latente (1) et en ce qu'au cours de la poursuite de la liquéfaction du fluide ou du milieu d'accumulation de chaleur (2), l'injection par les buses est réalisée par un nombre croissant d'étages (hauteurs H).

4. Accumulateur de chaleur latente selon l'une ou plusieurs des revendications précédentes caractérisé en ce que l'injection par les buses du fluide de transmission de chaleur (3), est réalisée de façon sensiblement simultanée à différentes hauteurs (H) ou bien un appareillage disponible est préparé à cet effet.

5. Accumulateur de chaleur latente selon l'une ou plusieurs des revendications précédentes, caractérisé en ce que l'injection par les buses est susceptible d'être réalisée en faisant un angle par rapport à la verticale.

6. Accumulateur de chaleur latente selon l'une ou plusieurs des revendications précédentes, caractérisé en ce que l'angle d'injection pour les buses et la pression d'injection des buses sont réglables - ou bien sont réglés -. de telle façon que l'on obtienne dans le fluide d'accumulation de chaleur (2) un parcours d'écoulement parabolique qui conduise, par rapport à l'emplacement d'injection des buses, tout d'abord au moins à une descente de niveau (U).

7. Accumulateur de chaleur latente selon l'une ou plusieurs des revendications précédentes, caractérisé en ce qu'à l'intérieur de l'accumulateur de chaleur latente (1), est prévu un dispositif permettant de casser les structures creuses (41) qui se forment au cours de l'injection du fluide d'accumulation de chaleur.

8. Accumulateur de chaleur latente selon la revendication 7, caractérisé en ce que le dispositif présente une structure en forme de spirale ou hélicoïdale.

9. Accumulateur de chaleur latente selon la revendication 7 ou 8, caractérisé en ce que le dispositif est constitué par un fil barbelé (55).

10. Accumulateur de chaleur latente selon l'une ou plusieurs des revendications précédentes, caractérisé en ce que la pression de pulvérisation et/ou la température de pulvérisation sont réglées de telle façon que l'on obtienne une traversée du fluide ou du milieu d'accumulation jusqu'à bord du récipient.

11. Accumulateur de chaleur latente selon l'une ou plusieurs des revendications précédentes, caractérisé en ce que la quantité pulvérisée et/ou la pression de pulvérisation et/ou la vitesse de sortie de jet du fluide de transport de chaleur sont réglées de telle façon qu'il ne se produise pas d'émulsion du fluide d'accumulation de chaleur et du fluide de transport de chaleur.

12. Accumulateur de chaleur latente selon l'une ou plusieurs des revendications précédentes, caractérisé en ce que le rapport en volume entre le fluide d'accumulation de chaleur (2) et le fluide de transmission de chaleur (3) est réglé entre 1:1 et 3:1

13. Accumulateur de chaleur latente selon l'une ou plusieurs des revendications précédentes, caractérisé en ce que, dans un organe de pulvérisation dans un plan (E), sont prévues des buses de pulvérisation (7) orientées de façon différente en ce qui concerne la répartition périphérique et/ou l'orientation angulaire.

14. Accumulateur de chaleur latente selon l'une ou plusieurs des revendications précédentes, caractérisé en ce que le dispositif de pulvérisation, à l'état chargé ou déchargé (de repos-) de l'accumulateur de chaleur latente (1) traverse en un empilement vertical du fluide de transmission de chaleur et du fluide d'accumulation de chaleur, aussi bien le fluide de transmission de chaleur qu'également le fluide d'accumulation de chaleur.

15. Accumulateur de chaleur latente selon l'une ou plusieurs des revendications précédentes, caractérisé en ce que le dispositif de pulvérisation comporte au moins un tube de buse (4) disposé de façon sensiblement verticale, les buses (7) étant orientées radialement.

16. Accumulateur de chaleur latente selon la revendication 15, caractérisé en ce que le tube de buse (4) est fermé vers le haut.

17. Accumulateur de chaleur latente selon l'une ou plusieurs des revendications précédentes, caractérisé en ce qu'il se produit une aspiration du fluide de transmission de chaleur dans une zone inférieure de l'accumulateur de chaleur latente (1).

18. Accumulateur de chaleur latente selon la revendication 17, caractérisé en ce qu'un filtre (17) est monté en amont du dispositif d'aspiration.

19. Accumulateur de chaleur latente selon la revendication 17 ou 18, caractérisé en ce qu'une bague d'aspiration (un éjecteur) (15) est réalisée.

20. Accumulateur de chaleur latente selon la revendication 19, caractérisé en ce que la bague d'aspiration (15) est réalisée sous la forme d'un tube d'aspiration équipé d'alésages d'aspiration (16).

21. Accumulateur de chaleur latente selon la revendication 20, caractérisé en ce que le tube d'aspiration est recouvert d'un tube flexible filtrant (17).

22. Accumulateur de chaleur latente selon l'une ou plusieurs des revendications 17 à 21, caractérisé en ce que, dans l'accumulateur de chaleur latente (1) au-dessus du dispositif d'aspiration (15) - et s'étendant de préférence chaque fois sur la totalité de la section transversale - est disposé un organe en réseau ou en treillis (14, 14', 14").

23. Accumulateur de chaleur latente selon la revendication 22, caractérisé en ce que plusieurs organes en réseau ou en treillis (14, 14', 14") sont disposés les uns au-dessus des autres.

24. Accumulateur de chaleur latente selon la revendication 23, caractérisé en ce que les dimensions d'ouverture/la largeur de maille des organes en réseau ou en treillis (14, 14', 14") augmentent avec la hauteur de l'accumulateur de chaleur latente (1).

25. Accumulateur de chaleur latente selon l'une ou plusieurs des revendications précédentes, caractérisé en ce que, dans l'accumulateur de chaleur latente (1), au-dessus du fluide d'accumulation de chaleur (2) est formé un espace de gaz ou gazeux (10) dans lequel règne au moins une légère surpression par rapport à la pression atmosphérique.

26. Accumulateur de chaleur latente selon la revendication 25, caractérisé en ce que l'espace de gaz est rempli de dioxyde de carbone et/ou d'azote et/ou d'air.

27. Accumulateur de chaleur latente selon l'une ou plusieurs des revendications précédentes, caractérisé en ce que le fluide d'accumulation de chaleur présente à l'état liquide une viscosité élevée.

28. Accumulateur de chaleur latente selon l'une ou plusieurs des revendications précédentes, caractérisé en ce que le fluide d'accumulation de chaleur contient une proportion aisément fusible, jusqu'à, par exemple, 10% en volume.

29. Accumulateur de chaleur latente selon l'une ou plusieurs des revendications précédentes, caractérisé en ce que le fluide de transport de chaleur est de l'eau ou un liquide à base d'alcool.

30. Accumulateur de chaleur latente selon l'une ou plusieurs des revendications précédentes, caractérisé en ce que le fluide de transport de chaleur est remplacé par un destructeur d'émulsion.

31. Accumulateur de chaleur latente selon l'une ou plusieurs des revendications 13 à 30, caractérisé en ce que, également à l'état de déstockage, dans le fluide d'accumulation de chaleur (2) à l'état figé ou solidifié, pour un accumulateur de chaleur latente à usage frigorifique, il est prévu au moins une buse de pulvérisation (7) pour le fluide de transmission de chaleur (3), en dessous du fluide d'accumulation de chaleur (2), ou bien au-dessus du fluide d'accumulation de chaleur (2).

32. Accumulateur de chaleur latente selon l'une ou plusieurs des revendications 13 à 31, caractérisé en ce que les buses de pulvérisation (7) pour le fluide de transmission de chaleur (3) sont susceptibles d'être préchauffées.

33. Accumulateur de chaleur latente selon l'une ou plusieurs des revendications 13 à 32, caractérisé en ce que les buses de pulvérisation (7) pour le fluide de transmission de chaleur (3) sont orientées de telle façon qu'il s'établisse un écoulement circulant dans le fluide d'accumulation de chaleur (2) et/ou dans le fluide de transmission de chaleur (3).

34. Accumulateur de chaleur latente selon l'une ou plusieurs des revendications précédentes, caractérisé en ce que l'écoulement dans le fluide d'accumulation de chaleur (2) et/ou dans le fluide de transmission de chaleur (3), comporte une composante verticale.

35. Accumulateur de chaleur latente selon l'une ou plusieurs des revendications précédentes, caractérisé en ce que, pour le stockage et le déstockage, divers organes, tubes de pulvérisation (21 jusqu'à 24) et tubes de buses (25 jusqu'à 28), sont prévus.

36. Accumulateur de chaleur latente selon l'une ou plusieurs des revendications 17 à 35, caractérisé en ce que, au-dessus du dispositif d'aspiration, est prévu un fond perforé (32) qui comporte des trous ou alésages de passage (34) affectés à une paroi extérieure de l'accumulateurs de chaleur latente (1).

37. Accumulateur de chaleur latente selon la revendication 35 ou 36, caractérisé en ce que des buses de pulvérisation (7) des tubes de pulvérisation individuels (21 jusqu'à 24) sont réalisées décalées en hauteur.

38. Accumulateur de chaleur latente selon l'une ou plusieurs des revendications 35 à 37, caractérisé en ce qu'un tube de pulvérisation (21 à 24), le cas échéant en coopération avec un tube d'alimentation (20), est réalisé à la façon d'un siphon.

39. Accumulateur de chaleur latente selon l'une ou plusieurs des revendications précédentes, dans lequel le fluide de transmission de chaleur est susceptible d'être stocké ou déstocké par l'intermédiaire d'une conduite de dérivation (51), par dérivation ou contournement des buses d'injection dans le fluide d'accumulation de chaleur, directement dans la zone du fluide de transmission de chaleur.

40. Accumulateur de chaleur latente selon l'une ou plusieurs des revendications précédentes, caractérise en ce que, dans la zone du fluide de transmission de chaleur dans l'accumulateur de chaleur latente est prévue une conduite annulaire (53) pour le stockage ou le déstockage du fluide de transmission de chaleur.

41. Accumulateur de chaleur latente selon la revendication 39 ou 40, caractérisé en ce que l'alimention en fluide de transmission de chaleur dans la dérivation vers le jeu de buses, est réalisée de telle façon qu'un déplacement rotatif du fluide dans l'accumulateur de chaleur latente soit supprimé ou bien soutenu.

42. Accumulateur de chaleur latente selon l'une ou plusieurs des revendications précédentes, caractérisé en ce que le jeu de buses est susceptible d'être réalisé avec des résistances à l'écoulement différentes, en fonction de la hauteur de l'accumulateur de chaleur latente (1).

43. Accumulateur de chaleur latente selon l'une ou plusieurs, des revendications précédentes, caractérisé en ce qu'une pluralité de buses (7) est prévue sur la hauteur (H) de l'accumulateur de chaleur latente (1), et en ce que les buses (7) présentent chacune une résistance à l'écoulement différente, en fonction de la hauteur associée (H).

44. Accumulateur de chaleur latente selon la revendication 43, caractérisé en ce que la résistance à l'écoulement des buses (7) disposée les plus hautes est plus faible que la résistance à l'écoulement des buses (7) disposées les plus basses.

45. Accumulateur de chaleur latente selon la revendication 43 ou 44, caractérisé en ce que un plan de buse, est susceptible d'être déconnecté.

46. Accumulateur de chaleur latente selon la revendication 45, caractérisé en ce qu'une buse destinée à la déconnexion comporte un clapet anti-retour.
